# EUROPEAN PATENT APPLICATION

(11) **EP 4 478 693 A1**
(43) Date of publication of application: **18.12.2024**
(21) Application number: 24739999.1
(22) Date of filing: 30.04.2024
(51) Int. Cl.: H04M 1/02, H04Q 1/38, H04Q 1/24, H04Q 1/48, G06F 1/16

(54) **ANTENNA AND ELECTRONIC DEVICE INCLUDING SAME**

(30) Priority: 04.05.2023 KR 20230058255; 12.06.2023 KR 20230074876
(71) Applicant: Samsung Electronics Co., Ltd., Suwon-si, Gyeonggi-do 16677 (KR)
(72) Inventor: SON, Cheolhong, Suwon-si, Gyeonggi-do 16677 (KR); SEOL, Kyungmoon, Suwon-si, Gyeonggi-do 16677 (KR); KIM, Yoonjung, Suwon-si, Gyeonggi-do 16677 (KR); PARK, Sehyun, Suwon-si, Gyeonggi-do 16677 (KR)
(74) Representative: HGF
(86) International application number: PCT/KR2024/005830
(87) International publication number: WO 2024/228531

(57) **Abstract**

According to various embodiments, the electronic devicemay include at least one housing; a first display disposed in the inner space of at least one housing; a second display disposed in the inner space to be facing the opposite direction of the first display and including a display panel and a conductive sheet disposed on the rear surface of the display panel;a board disposed in the inner space; a wireless communication circuit disposed on the board and electrically connected through the first point of the conductive sheet; and a grounding structure electrically connected to the conductive sheet in the second point spaced at a distance from the first point, wherein the wireless communication circuit isconfigured to transmit or receive wireless signals in the specified frequency band through at least a portion of the conductive sheet.

## Description

### [Technical Field]

Embodiments of the present disclosure relate to an antenna and an electronic device including the same.

### [Background Art]

Electronic devices are gradually becoming slimmer to meet consumers' purchasing desires as the functional gap is narrowing for each manufacturer, and they are being developed to differentiate their functional elements while increasing rigidity and enhancing design aspects. As part of this trend, electronic devices are being developed to achieve superior radiation performance through structural change of at least one antenna which must be provided for communication among their components.

### [Disclosure]

### [Technical Problem]

An electronic device may include a foldable electronic device that includes a first housing and a second housing foldably connected to the first housing through a hinge device. The electronic device may include a first display (e.g., a flexible display) that is used in an unfolded state and disposed from the first housing to be supported by at least a portion of the second housing through a hinge device. The electronic device may include a second display (e.g., a subdisplay) that is used in the folded state and, in the unfolded state, disposed in the first or second housing facing the opposite direction from the first display. Some electronic devices (e.g., bar type electronic devices) may include a first display disposed in the front surface and a second display disposed in the rear surface, in a single housing.

The electronic device may includes at least one antenna disposed in the inner space of at least one housing, or may include at least one antenna (e.g., an antenna included in a metal bezel) that uses at least a portion of the conductive side surface. The volume and number of such antennas may be determined by the frequency, bandwidth, and/or type of service the electronic device is to communicate via.

However, while electronic devices require antennas with different frequency bands and wide bandwidths, they may include large screen displays. The inclusion of large screen displays of electronic devices may make antenna placement difficult.

Furthermore, if an antenna is disposed between the first and second displays and/or near a metal bezel used as another antenna, the radiation performance may be reduced by the first and/or second display (e.g., nulls occur). In addition, the electronic device may also have a reduced radiation performance if antennas are disposed between and/or near the bending areas of the flexible display.

Various embodiments of the present disclosure may provide an antenna and an electronic device including it, in which an enhanced radiation performance is realized by using some components of the display as a radiator.

Various embodiments may provide an antenna and the electronic device including it that improve radiation performance without affecting or reducing the effect on the performance of other nearby antennas.

Various embodiments may provide an antenna and an electronic device including it that are constituted to be advantageous for the frequency shift and/or the bandwidth expansion.

However, the problems to be solved in the present disclosure are not limited to the aforementioned problems and may be expanded in various ways within the scope of the ideas and areas of the present disclosure.

### [Technical Solution]

According to various embodiments, the electronic device may include at least one housing; a first display disposed in the inner space of at least one housing; a second display disposed in the inner space to be facing the opposite direction of the first display and including a display panel and a conductive sheet disposed on the rear surface of the display panel; a board disposed in the inner space; a wireless communication circuit disposed on the board and electrically connected through the first point of the conductive sheet; and a grounding structure electrically connected to the conductive sheet in the second point spaced at a distance from the first point, wherein the wireless communication circuit is configured to transmit or receive wireless signals in the specified frequency band through at least a portion of the conductive sheet.

According to various embodiments, the electronic device may include a first housing; a second housing foldably coupled to the first housing through a hinge device; a first display that, in an unfolded state, is disposed to be supported by the first housing and the second housing and disposed in the inner space of the first housing; a second display disposed in the inner space to be facing the opposite direction of the first display and including a display panel and a conductive sheet disposed on the rear surface of the display panel; a board disposed between the first display and the second display in the inner space; a wireless communication circuit disposed on the board and electrically connected through the first point of the conductive sheet; and a grounding structure electrically connected to the conductive sheet in the second point spaced at a distance from the first point, wherein the wireless communication circuit is configured to transmit or receive wireless signals in the specified frequency band through at least a portion of the conductive sheet.

### [Advantageous Effects]

The electronic device according to the exemplary embodiments of the present disclosure may reduce the degradation of the radiated performance by the display by including an antenna that uses a conductive sheet, used as a component of the display, as a radiator. In addition, the antenna may include a power feed unit and a grounding part disposed at a predetermined distance from the power feed unit, and efficient frequency shifting may be possible by determining the distance between the power feed unit and the grounding part.

In addition, various effects that are directly or indirectly identified through the present document may be provided.

The effects obtainable in the present disclosure are not limited to the aforementioned effects, and other effects not mentioned may be easily understood from the following description by a person having ordinary knowledge in the art to which the disclosure pertains.

### [Description of Drawings]

In connection with the description of the drawings, the same or similar reference numerals may be used for the same or similar components.
FIG. 1 is a block diagram of an electronic device in a networked environment according to various embodiments of the present disclosure.
FIG. 2a is a diagram of an electronic device illustrating a flat state or unfolded state according to various embodiments of the present disclosure.
FIG. 2b is a plan view illustrating the front surface of an electronic device in an unfolded state according to various embodiments of the present disclosure.
FIG. 2c is a plan view illustrating the rear surface of an electronic device in the unfolded state according to various embodiments of the present disclosure.
FIG. 3a is a diagram of an electronic device illustrating a folded state according to various embodiments of the present disclosure.
FIG. 3b is a diagram of an electronic device illustrating an intermediate state according to various embodiments of the present disclosure.
FIG. 4 is an exploded perspective view of the electronic device according to various embodiments of the present disclosure.
FIG. 5a is a partial configuration diagram of the electronic device according to various embodiments of the present disclosure.
FIG. 5b is a partial configuration diagram of an electronic device including a second display according to various embodiments of the present disclosure.
FIG. 5c is a cross-sectional view of the electronic device taken along line 5c-5c of FIG.5b according to various embodiments of the present disclosure.
FIG. 6a is a partial configuration diagram of the electronic device illustrating the electrical connection structure between a wireless communication circuit and a power feed unit according to various embodiments of the present disclosure.
FIGS.6b and 6c are a partial cross-sectional view of the electronic device illustrating the electrical connection structure of a conductive sheet and a board according to various embodiments of the present disclosure.
FIG. 7a is a diagram for illustrating the power feed point of the conductive sheet in an electronic device according to various embodiments of the present disclosure.
FIG. 7b is a graph comparing the radiation performance of the antenna according to the power feed point of the conductive sheet at FIG.7a according to various embodiments of the present disclosure.
FIG. 8 is a graph comparing the bandwidth features of the antennas according to various embodiments of the present disclosure.
FIG. 9a is a diagram for illustrating the location of the ground part of a conductive sheet in an electronic device according to various embodiments of the present disclosure.
FIG. 9b is a graph illustrating the frequency features of the antenna according to the ground location of the conductive sheet of FIG. 9a according to various embodiments of the present disclosure.
FIGS. 10a and 10b are diagrams comparing the current distribution of antennas with or without a ground part according to various embodiments of the present disclosure.
FIG. 11 is a partial cross-sectional view of the electronic device according to various embodiments of the present disclosure.
FIG. 12a is a partial configuration diagram of the electronic device including bezel antennas according to various embodiments of the present disclosure.
FIG. 12b is a partial cross-sectional view of the electronic device taken along line 12b-12b of FIG. 12a according to various embodiments of the present disclosure.
FIG. 13 is a graph comparing the performance of bezel antennas with or without antennas according to various embodiments of the present disclosure.
FIG. 14a is a partial configuration diagram of the electronic device including connector cables according to various embodiments of the present disclosure.
FIG. 14b is a partial cross-sectional view of the electronic device taken along line 14b-14b of FIG. 14a according to various embodiments of the present disclosure.
FIGS. 15a and 15b are diagrams comparing the current distribution of the antenna with or without a grounding pad in FIG. 14a according to various embodiments of the present disclosure.
FIG. 16 is a graph comparing the radiation features of the antenna with or without a grounding pad in FIG. 14a according to various embodiments of the present disclosure.
FIG. 17 is a graph comparing the frequency features of the antenna according to the ground location of the connector pin in FIG. 14a according to various embodiments of the present disclosure.
FIG. 18 is a partial diagram of the electronic device including bezel antennas according to various embodiments of the present disclosure.
FIG. 19 is a graph comparing the performance of bezel antennas with or without an antenna including a grounding pad of FIG. 18 according to various embodiments of the present disclosure.
FIG. 20a is a diagram of an electronic device that schematically illustrates the unfolded state according to various embodiments of the present disclosure.
FIG. 20b is a diagram of an electronic device that schematically illustrates the folded state of the electronic device of FIG. 20a according to various embodiments of the present disclosure.
FIG. 21a is a front perspective view of the electronic device according to various embodiments of the present disclosure.
FIG. 21b is a rear perspective view of the electronic device according to various embodiments of the present disclosure.
FIG. 21c is a configuration diagram of the electrical connection relationship between a flexible display and a board in the bendable area according to various embodiments of the present disclosure.
FIG. 22a is a front perspective view of the electronic device according to various embodiments of the present disclosure.
FIG. 22b is a rear perspective view of the electronic device according to various embodiments of the present disclosure.

### [Mode for Disclosure]

With reference to the drawings, embodiments of the present disclosure are explained in detail so that they can be easily performed by persons with ordinary knowledge in the technical field to which the present disclosure pertains. However, the present disclosure may be implemented in a number of different forms and is not limited to the embodiments described herein. In connection with the description of the drawings, the same or similar reference numerals may be used for the same or similar components. In addition, in drawings and related descriptions, descriptions of well-known functions and configurations may be omitted for clarity and brevity.

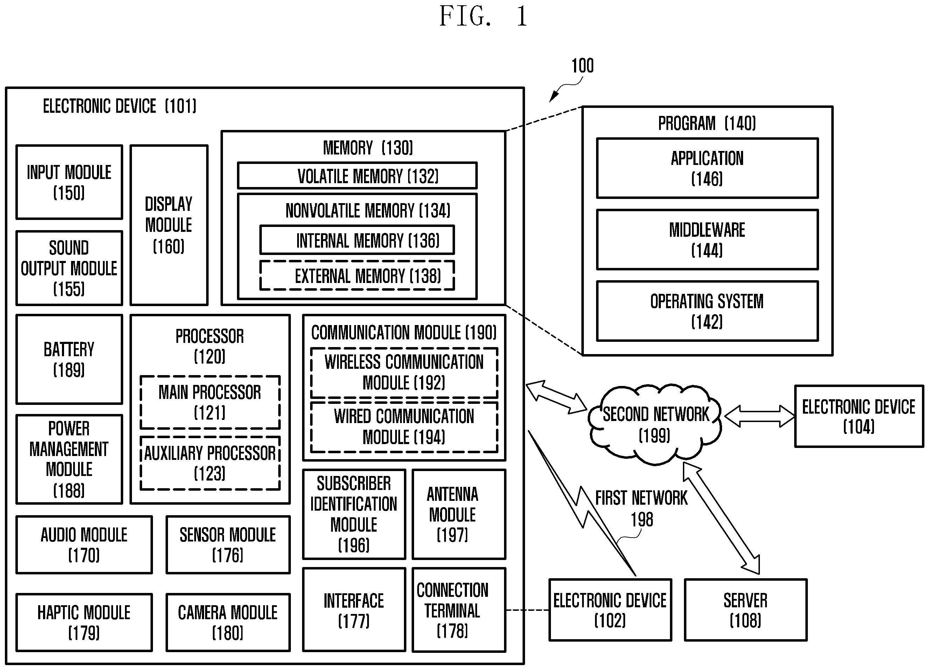

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). The electronic device 101 may communicate with the electronic device 104 via the server 108. The electronic device 101 includes a processor 120, memory 130, an input device 150, an audio output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The audio output device 155 may output sound signals to the outside of the electronic device 101. The audio output device 155 may include, for example, a speaker or a receiver. The speaker may be used for general purposes, such as playing multimedia or playing record, and the receiver may be used for an incoming calls. The receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. The display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input device 150, or output the sound via the audio output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

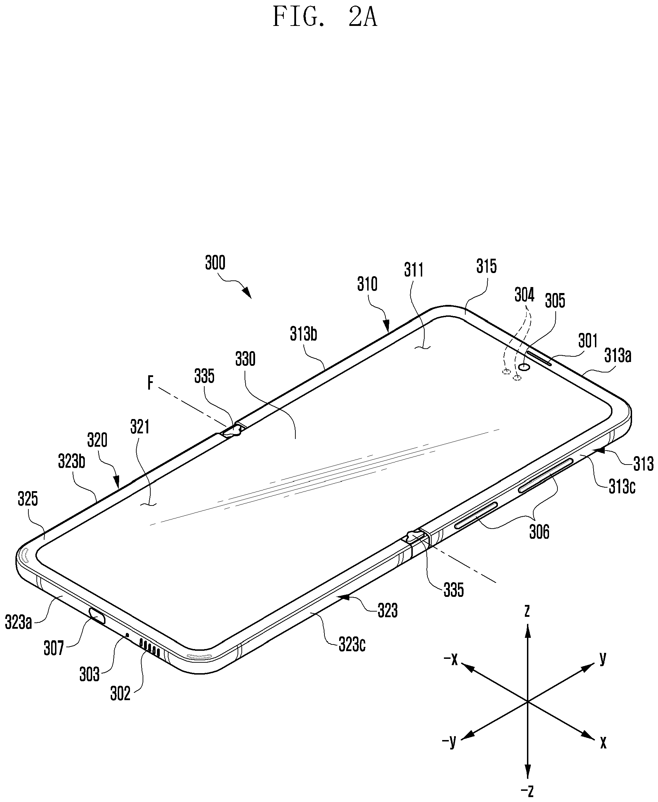

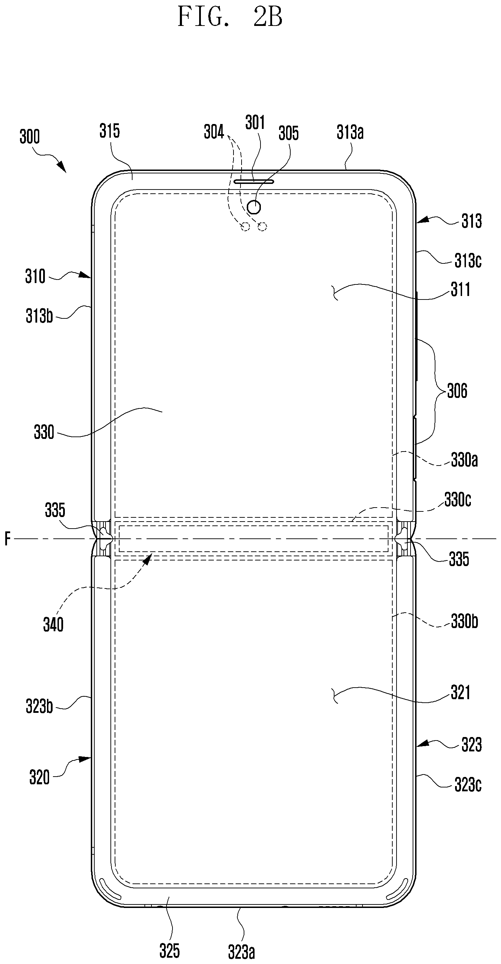

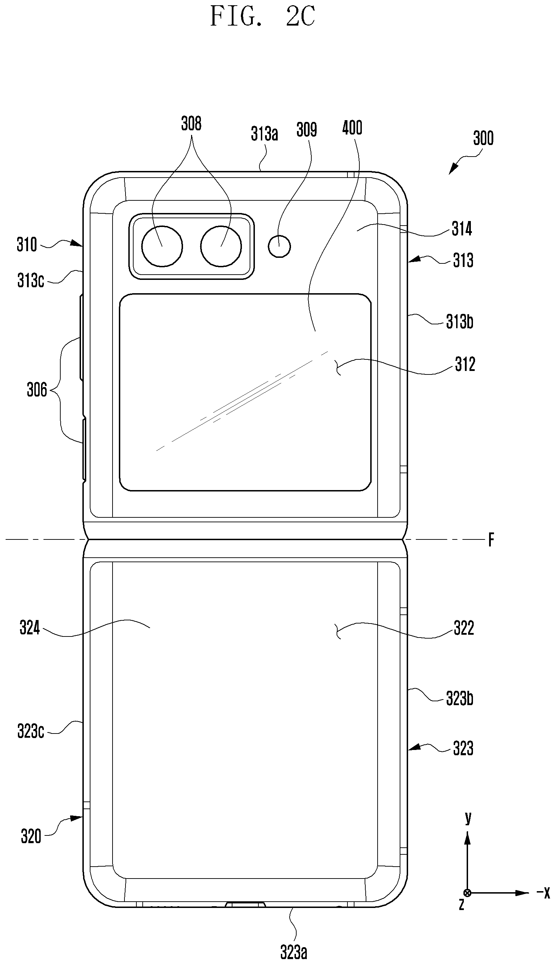

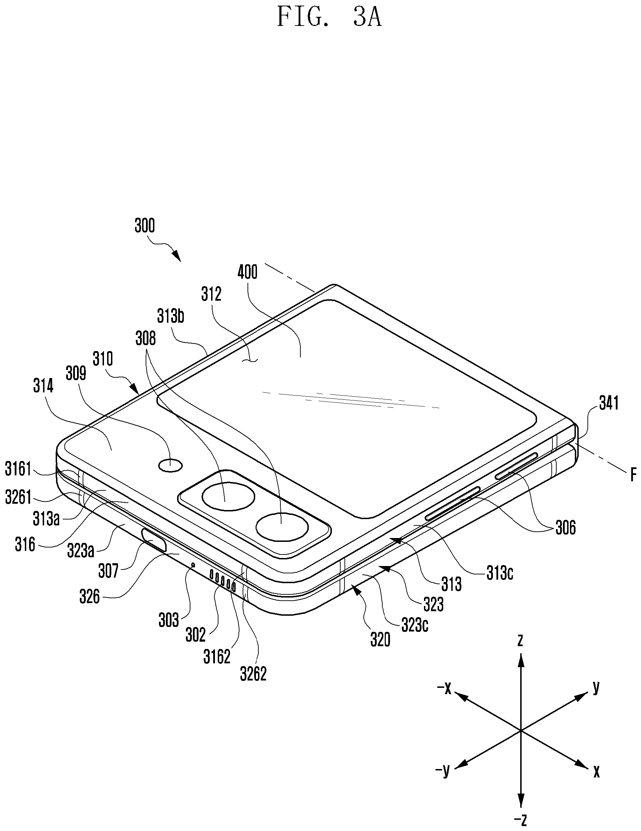

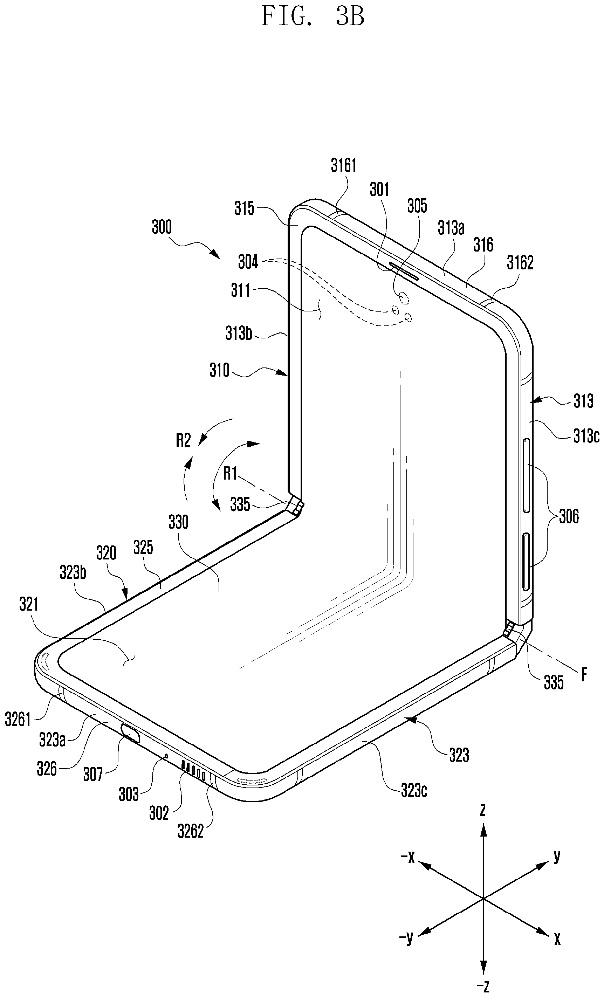

FIG. 2A is a front perspective view of an electronic device in a flat or unfolded state according to certain embodiments of the disclosure. FIG. 2B is a plan view illustrating the front of the electronic device in an unfolded state according to certain embodiments of the disclosure. FIG. 2C is a plan view illustrating the back of the electronic device in an unfolded state according to certain embodiments of the disclosure. FIG. 3A is a perspective view of the electronic device in a folded state according to certain embodiments of the disclosure. FIG. 3B is a perspective view of the electronic device in an intermediate state according to certain embodiments of the disclosure.

With reference to FIGS. 2A to 3B, the electronic device 300 may include a pair of housings 310 and 320 (e.g., foldable housings) that are rotatably coupled as to allow folding relative to a hinge structure (e.g., hinge structure 340 in FIG. 2B) (e.g., hinge device or hinge module). In certain embodiments, the hinge structure 340 may be disposed in the X-axis direction or in the Y-axis direction. In certain embodiments, two or more hinge structures 340 may be arranged to be folded in a same direction or in different directions. According to an embodiment, the electronic device 300 may include a flexible display 330 (e.g., foldable display) disposed in an area formed by the pair of housings 310 and 320. According to an embodiment, the first housing 310 and the second housing 320 may be disposed on both sides about the folding axis (axis F), and may have a substantially symmetrical shape with respect to the folding axis (axis F). According to an embodiment, the angle or distance between the first housing 310 and the second housing 320 may vary, depending on whether the state of the electronic device 300 is a flat or unfolded state, a folded state, or an intermediate state.

According to certain embodiments, the pair of housings 310 and 320 may include a first housing 310 (e.g., first housing structure) coupled to the hinge structure 340, and a second housing 320 (e.g., second housing structure) coupled to the hinge structure 340. According to an embodiment, in the unfolded state, the first housing 310 may include a first surface 311 facing a first direction (e.g., front direction) (z-axis direction), and a second surface 312 facing a second direction (e.g., rear direction) (negative z-axis direction) opposite to the first surface 311. According to an embodiment, in the unfolded state, the second housing 320 may include a third surface 321 facing the first direction (z-axis direction), and a fourth surface 322 facing the second direction (negative z-axis direction). According to an embodiment, the electronic device 300 may be operated in such a manner that the first surface 311 of the first housing 310 and the third surface 321 of the second housing 320 face substantially the same first direction (z-axis direction) in the unfolded state, and the first surface 311 and the third surface 321 face one another in the folded state. According to an embodiment, the electronic device 300 may be operated in such a manner that the second surface 312 of the first housing 310 and the fourth surface 322 of the second housing 320 face substantially the same second direction (negative z-axis direction) in the unfolded state, and the second surface 312 and the fourth surface 322 face one another in opposite directions in the folded state. For example, in the folded state, the second surface 312 may face the first direction (z-axis direction), and the fourth surface 322 may face the second direction (negative z-axis direction).

According to certain embodiments, the first housing 310 may include a first side member 313 that at least partially forms an external appearance of the electronic device 300, and a first rear cover 314 coupled to the first side member 313 that forms at least a portion of the second surface 312 of the electronic device 300. According to an embodiment, the first side member 313 may include a first side surface 313a, a second side surface 313b extending from one end of the first side surface 313a, and a third side surface 313c extending from the other end of the first side surface 313a. According to an embodiment, the first side member 313 may be formed in a rectangular shape (e.g., square or rectangle) through the first side surface 313a, second side surface 313b, and third side surface 313c.

According to certain embodiments, the second housing 320 may include a second side member 323 that at least partially forms the external appearance of the electronic device 300, and a second rear cover 324 coupled to the second side member 323, forming at least a portion of the fourth surface 322 of the electronic device 300. According to an embodiment, the second side member 323 may include a fourth side surface 323a, a fifth side surface 323b extending from one end of the fourth side surface 323a, and a sixth side surface 323c extending from the other end of the fourth side surface 323a. According to an embodiment, the second side member 323 may be formed in a rectangular shape through the fourth side surface 323a, fifth side surface 323b, and sixth side surface 323c.

According to certain embodiments, the pair of housings 310 and 320 are not limited to the shape and combinations illustrated herein, and may be implemented with a combination of other shapes or parts. For example, in certain embodiments, the first side member 313 may be integrally formed with the first rear cover 314, and the second side member 323 may be integrally formed with the second rear cover 324.

According to certain embodiments, in the unfolded state of the electronic device 300, the second side surface 313b of the first side member 313 and the fifth side surface 323b of the second side member 323 may be connected without a gap formed therebetween. According to an embodiment, in the unfolded state of the electronic device 300, the third side surface 313c of the first side member 313 and the sixth side surface 323c of the second side member 323 may be connected without a gap formed therebetween. According to an embodiment, in the unfolded state, the electronic device 300 may be configured such that the combined length of the second side surface 313b and the fifth side surface 323b is longer than the combined length of the first side surface 313a and/or the fourth side surface 323a. In addition, the combined length of the third side surface 313c and the sixth side surface 323c may be configured to be longer than the length of the first side surface 313a and/or the fourth side surface 323a.

According to certain embodiments, the first side member 313 and/or the second side member 323 may be formed of a metal, and may further include a polymer injected into the metal. According to an embodiment, the first side member 313 and/or the second side member 323 may include at least one conductive portion 316 and/or 326 electrically segmented through one or more segmenting portions 3161 and 3162 and/or segmenting 3261 and 3262, which may be formed using a polymer. In this case, the at least one conductive portion may be electrically connected to a wireless communication circuit included in the electronic device 300, and may be used as an antenna operating in at least one designated band (e.g., about 400MHz ~ about 6000MHz).

According to certain embodiments, the first rear cover 314 and/or the second rear cover 324 may be formed of, for example, coated or tinted glass, ceramic, polymer, metal (e.g., aluminum, stainless steel or "STS", or magnesium), or a combination thereof.

According to certain embodiments, the flexible display 330 may be disposed to extend from the first surface 311 of the first housing 310 across the hinge structure 340 to at least a portion of the third surface 321 of the second housing 320. For example, the flexible display 330 may include a first region 330a substantially corresponding to the first surface 311, a second region 330b corresponding to the second surface 312, and a third region 330c (e.g., the bendable region) connecting the first region 330a and the second region 330b and corresponding to the hinge structure 340. According to an embodiment, the electronic device 300 may include a first protection cover 315 (e.g., first protection frame or first decoration member) coupled along the periphery of the first housing 310. According to an embodiment, the electronic device 300 may include a second protection cover 325 (e.g., second protection frame or second decoration member) coupled along the periphery of the second housing 320. According to an embodiment, the first protection cover 315 and/or the second protection cover 325 may be formed of a metal or polymer material. According to an embodiment, the first protection cover 315 and/or the second protection cover 325 may be used as a decorative member. According to an embodiment, the flexible display 330 may be positioned such that the periphery of the first region 330a is interposed between the first housing 310 and the first protection cover 315. According to an embodiment, the flexible display 330 may be positioned such that the periphery of the second region 330b is interposed between the second housing 320 and the second protection cover 325. According to an embodiment, the flexible display 330 may be positioned such that the periphery of the flexible display 330 corresponding to a protection cap 335 is protected through the protection cap disposed in a region corresponding to the hinge structure 340. Consequently, the periphery of the flexible display 330 may be substantially protected from the outside. According to an embodiment, the electronic device 300 may include a hinge housing 341 (e.g., hinge cover) that is disposed so as to support the hinge structure 340. The hinge housing 341 may further be exposed to the outside when the electronic device 300 is in the folded state, and be invisible as viewed from the outside when retracted into a first space (e.g., internal space of the first housing 310 ) and a second space (e.g., internal space of the second housing 320) when the electronic device 300 is in the unfolded state. In certain embodiments, the flexible display 330 may be disposed to extend from at least a portion of the second surface 312 to at least a portion of the fourth surface 322. In this case, the electronic device 300 may be folded so that the flexible display 330 is exposed to the outside (out-folding scheme).

According to certain embodiments, the electronic device 300 may include a second display 400 disposed separately from the flexible display 330. According to an embodiment, the second display 400 may be disposed to be at least partially exposed on the second surface 312 of the first housing 310, and may display status information of the electronic device 300 in place of the display function of the flexible display 330 in case of the folded state. According to an embodiment, the second display 400 may be disposed to be visible from the outside through at least some region of the first rear cover 314. In certain embodiments, the second display 400 may be disposed on the fourth surface 322 of the second housing 320. In this case, the second display 400 may be disposed to be visible from the outside through at least some region of the second rear cover 324.

According to certain embodiments, the electronic device 300 may include at least one of an input device 303 (e.g., microphone), sound output devices 301 and 302, a sensor module 304, camera devices 305 and 308, a key input device 306, or a connector port 307. In the illustrated embodiment, the input device 303 (e.g., microphone), sound output devices 301 and 302, sensor module 304, camera devices 305 and 308, key input device 306, and connector port 307 indicate a hole or shape formed in the first housing 310 or the second housing 320, but may be defined to include a substantial electronic component (e.g., input device, sound output device, sensor module, or camera device) that is disposed inside the electronic device 300 and operated through a hole or a shape.

According to certain embodiments, the input device 303 may include at least one microphone disposed on the second housing 320. In certain embodiments, the input device 303 may include a plurality of microphones disposed to detect the direction of a sound. In certain embodiments, a plurality of microphones may be disposed at appropriate positions in the first housing 310 and/or the second housing 320. According to an embodiment, the sound output devices 301 and 302 may include speakers. According to an embodiment, the input device 303 may include a receiver for calls disposed in the first housing 310, and a speaker disposed in the second housing 320. In certain embodiments, the input device 303, the sound output devices 301 and 302, and the connector port 307 may be disposed in a space arranged in the first housing 310 and/or the second housing 320 of the electronic device 300, and may be exposed to the external environment through at least one hole formed in the first housing 310 and/or the second housing 320. According to an embodiment, at least one connector port 307 may be used to transmit and receive power and/or data to and from an external electronic device. In certain embodiments, at least one connector port (e.g., ear jack hole) may accommodate a connector (e.g., ear jack) for transmitting and receiving an audio signal to and from an external electronic device. In certain embodiments, the hole formed in the first housing 310 and/or the second housing 320 may be commonly used for the input device 303 and the sound output devices 301 and 302. In certain embodiments, the sound output devices 301 and 302 may include a speaker (e.g., piezo speaker) that operates without using a hole formed in the first housing 310 and/or the second housing 320.

According to certain embodiments, the sensor module 304 may generate an electrical signal or data value corresponding to an internal operating state of the electronic device 300 or an external environmental state. The sensor module 304 may detect an external environment, for example, through the first surface 311 of the first housing 310. In certain embodiments, the electronic device 300 may further include at least one sensor module disposed to detect an external environment through the second surface 312 of the first housing 310. According to an embodiment, the sensor module 304 (e.g., illuminance sensor) may be disposed under the flexible display 330 to detect an external environment through the flexible display 330. According to an embodiment, the sensor module 304 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 304.

According to certain embodiments, the camera devices 305 and 308 may include a first camera device 305 (e.g., front camera device) disposed on the first surface 311 of the first housing 310, and a second camera device 308 disposed on the second surface 312 of the first housing 310. The electronic device 300 may further include a flash 309 disposed close to the second camera device 308. According to an embodiment, the camera device 305 or 308 may include one or more lenses, an image sensor, and/or an image signal processor. The flash 309 may include, for example, a light emitting diode or a xenon lamp. According to an embodiment, the camera devices 305 and 308 may be arranged so that two or more lenses (e.g., wide-angle lens, super-wide-angle lens, or telephoto lens) and image sensors are positioned on one surface (e.g., first surface 311, second surface 312, third surface 321, or fourth surface 322) of the electronic device 300. In certain embodiments, the camera devices 305 and 308 may include time-of-flight (TOF) lenses and/or an image sensor.

According to certain embodiments, the key input device 306 (e.g., key button) may be disposed on the third side surface 313c of the first side member 313 of the first housing 310. In certain embodiments, the key input device 306 may be disposed on at least one of the other side surfaces 313a and 313b of the first housing 310 and/or the side surfaces 323a, 323b and 323c of the second housing 320. In certain embodiments, the electronic device 300 may not include some or all of the key input devices 306, and those not included key input devices 306 may be implemented in other forms, such as soft keys, on the flexible display 330. In certain embodiments, the key input device 306 may be implemented by using a pressure sensor included in the flexible display 330.

According to certain embodiments, some of the camera devices 305 and 308 (e.g., first camera device 305) or the sensor module 304 may be disposed to be exposed through the flexible display 330. For example, the first camera device 305 or the sensor module 304 may be arranged in the internal space of the electronic device 300 so as to be in contact with the external environment through an opening (e.g., through hole) formed at least partially in the flexible display 330. In another embodiment, some sensor modules 304 may be arranged in the internal space of the electronic device 300 so as to perform their functions without being visually exposed through the flexible display 330. For example, in this case, the opening of a region of the flexible display 330 facing the sensor module may be not needed.

With reference to FIG. 3B, the electronic device 300 may be operated to remain in an intermediate state through the hinge structure 340. In this case, the electronic device 300 may control the flexible display 330 to display different pieces of content on the display area corresponding to the first surface 311 and the display area corresponding to the third surface 321. According to an embodiment, the electronic device 300 may be operated substantially in an unfolded state (e.g., unfolded state of FIG. 2A) and/or substantially in a folded state (e.g., folded state of FIG. 3A) with respect to a specific inflection angle (e.g., angle between the first housing 310 and the second housing 320 in the intermediate state) through the hinge structure 340. For example, when a pressing force is applied in the unfolding direction (R1 direction) in a state where the electronic device 300 is unfolded at a specific inflection angle, through the hinge structure 340, the electronic device 300 may be transitioned to an unfolded state (e.g., unfolded state of FIG. 2A). For example, when a pressing force is applied in the folding direction (R2 direction) in a state where the electronic device 300 is unfolded at a specific inflection angle, through the hinge structure 340, the electronic device 300 may be transitioned to a closed state (e.g., folded state of FIG. 3A). In an embodiment, the electronic device 300 may be operated to remain in an unfolded state at various angles (not shown) through the hinge structure 340.

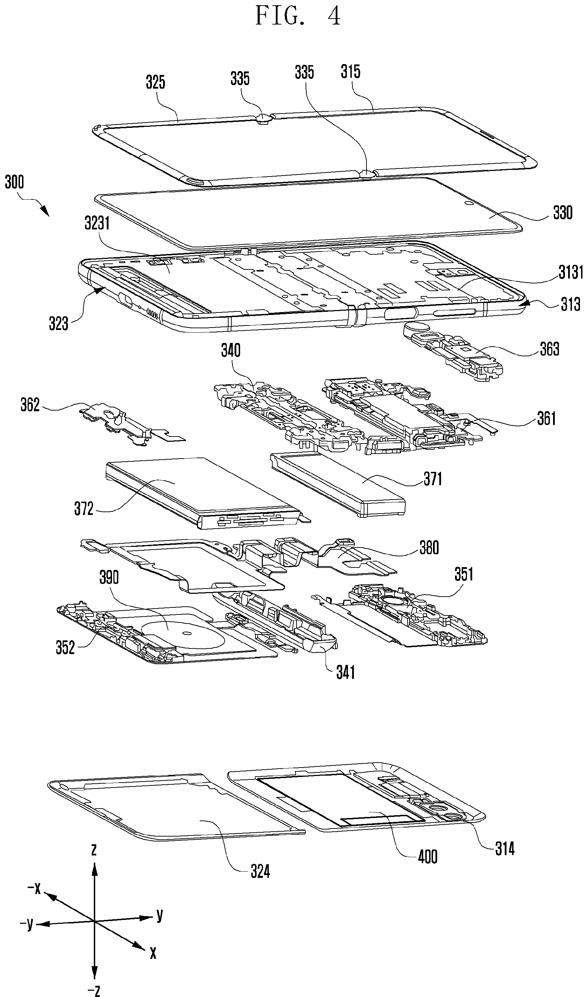

FIG. 4 is an exploded perspective view of the electronic device according to certain embodiments of the disclosure.

With reference to FIG. 4, the electronic device 300 may include a first side member 313 (e.g., first side frame), a second side member 323 (e.g., second side frame), and a hinge structure 340 rotatably connecting the first side member 313 and the second side member 323. According to an embodiment, the electronic device 300 may include a first support member 3131 at least partially extending from the first side member 313, and a second support member 3231 at least partially extending from the second side member 323. According to an embodiment, the first support member 3131 may be integrally formed with the first side member 313 or may be structurally coupled to the first side member 313. Similarly, the second support member 3231 may be integrally formed with the second side member 323 or may be structurally coupled to the second side member 323. According to an embodiment, the electronic device 300 may include a flexible display 330 disposed to be supported by the first support member 3131 and the second support member 3231. According to an embodiment, the electronic device 300 may include a first rear cover 314 that is coupled to the first side member 313 and provides a first space between itself and the first support member 3131, and a second rear cover 324 that is coupled to the second side member 323 and provides a second space between itself and the second support member 3231. In certain embodiments, the first side member 313 and the first rear cover 314 may be integrally formed. In certain embodiments, the second side member 323 and the second rear cover 324 may be integrally formed. According to an embodiment, the electronic device 300 may include a first housing 310 (e.g., first housing 310 in FIG. 2A) (e.g., first housing structure) provided through the first side member 313, the first support member 3131, and the first rear cover 314. According to an embodiment, the electronic device 300 may include a second housing (e.g., second housing 320 in FIG. 2A) (e.g., second housing structure) provided through the second side member 323, the second support member 3231, and the second rear cover 324. According to an embodiment, the electronic device 300 may include a second display 400 that is disposed to be visible from the outside through at least some region of the first rear cover 314.

According to certain embodiments, the electronic device 300 may include a first substrate assembly 361 (e.g., main printed circuit board), a camera assembly 363, a first battery 371, or a first bracket 351, arranged in the first space between the first side member 313 and the first rear cover 314. According to an embodiment, the camera assembly 363 may include a plurality of camera devices (e.g., camera devices 305 and 308 in FIGS. 2A and 3A), and may be electrically connected to the first substrate assembly 361. According to an embodiment, the first bracket 351 may provide a support structure for supporting the first substrate assembly 361 and/or the camera assembly 363, and improved rigidity. According to an embodiment, the electronic device 300 may include a second board assembly 362 (e.g., sub printed circuit board), an antenna 390 (e.g., coil member), a second battery 372, or a second bracket 352, arranged in the second space between the second side member 323 and the second rear cover 324. According to an embodiment, the electronic device 300 may include a wiring member 380 (e.g., FPCB) extending from the first substrate assembly 361 across the hinge structure 340 to a plurality of electronic components arranged between the second side member 323 and the second rear cover 324, to provide electrical connections therebetween. According to an embodiment, the antenna 390 may include a near field communication (NFC) antenna, a wireless charging antenna, and/or a magnetic secure transmission (MST) antenna. The antenna 390 may, for example, perform short-range communication with an external device or wirelessly transmit and receive power utilized for charging.

According to certain embodiments, the electronic device 300 may include a hinge housing 341 (e.g., hinge cover) that supports the hinge structure 340 and is disposed so as to be exposed to the outside when the electronic device 300 is in the folded state (e.g., folded state of FIG. 3A) and be invisible from the outside by being retracted into the first space and/or the second space when the electronic device 300 is in the unfolded state (e.g., unfolded state of FIG. 2A).

According to certain embodiments, the electronic device 300 may include a first protection cover 315 coupled along the periphery of the first side member 313. According to an embodiment, the electronic device 300 may include a second protection cover 325 coupled along the periphery of the second side member 323. According to an embodiment, in the flexible display 330, the periphery of a first flat portion (e.g., first flat portion 330a in FIG. 2B) may be protected by the first protection cover 315. According to an embodiment, in the flexible display 330, the periphery of a second flat portion (e.g., second flat portion 330b in FIG. 2B) may be protected by the second protection cover 325. According to an embodiment, the electronic device 300 may include a protection cap 335 that protects the periphery of the third region (e.g., third region 330c in FIG. 2B) of the flexible display 330 corresponding to the hinge structure 340. In certain embodiments, the protection cap 335 and/or protection covers may be not needed.

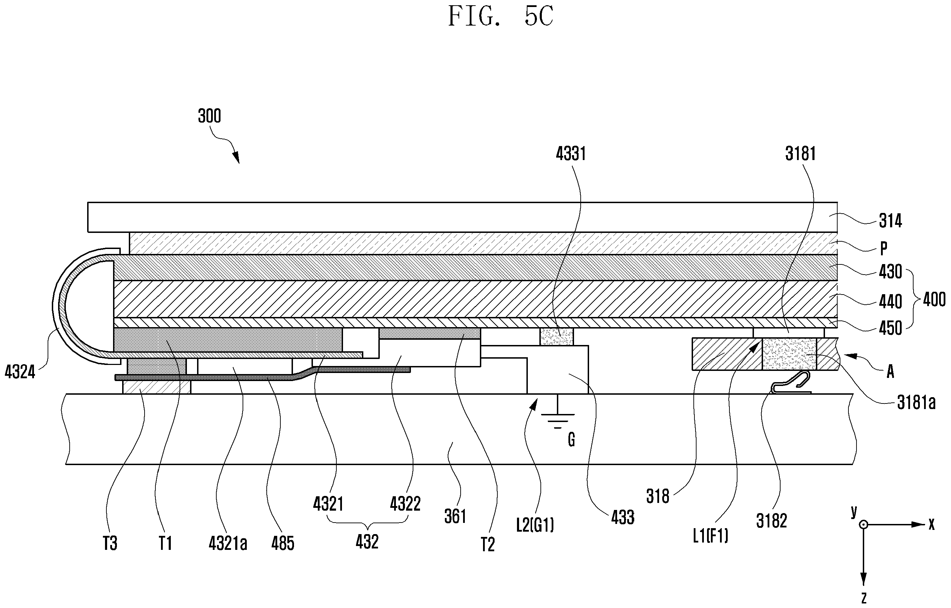

According to the exemplary embodiments of the present disclosure, the electronic device 300 may include an antenna (e.g., a display antenna) formed from a conductive sheet (e.g., a conductive sheet 450 of FIG. 5c) disposed on the rear surface of a second display 400 and a wireless communication circuit (e.g., a wireless communication module 192 of FIG. 1) disposed in a first board assembly 361 (i.e. circuit board) electrically connected to the conductive sheet. In one embodiment, even though the antenna is disposed between the first display 330 and the second display 400, radiation degradation may be reduced because it is operated using some components (e.g., a conductive sheet) of the second display 400. Throughout this disclosure the conductive sheet is said to be part of a display or disposed in conjunction with a display; however, the conductive sheet is not so limited and may be not be part of the display and may be included for functionality unrelated or only partially related to a display.

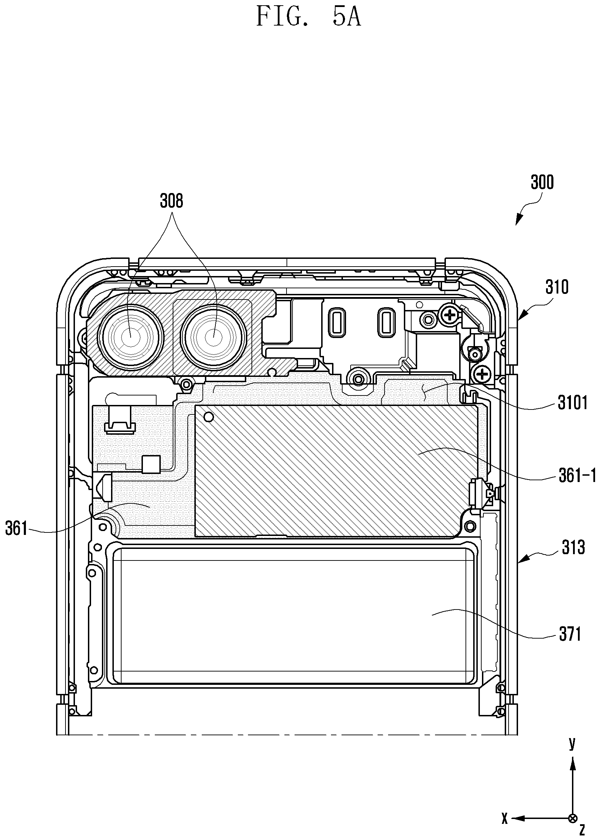

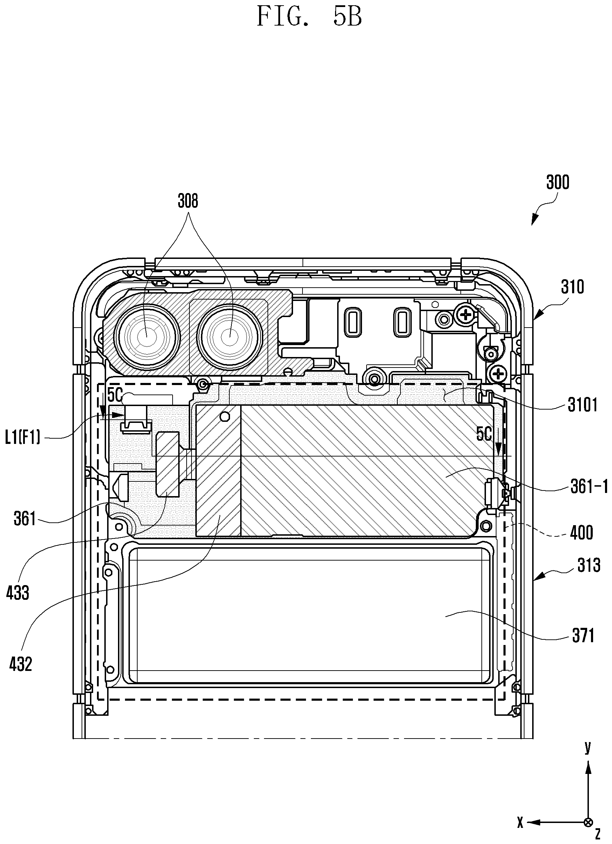

FIG. 5a is a partial configuration diagram of the electronic device according to various embodiments of the present disclosure. FIG. 5b is a partial configuration diagram of an electronic device including a second display according to various embodiments of the present disclosure. FIG. 5c is a cross-sectional view of the electronic device taken along line 5c-5c of FIG. 5b according to various embodiments of the present disclosure.

FIG. 5a is a diagram illustrating the rear surface of the first housing 310 with the first rear cover (e.g., the first rear cover 314 of FIG.2c) and the second display (e.g., the second display 400 of FIG.2c) omitted, and FIG. 5b is a diagram illustrating the rear surface of the first housing 310 with the first rear cover (e.g., the first rear cover 314 of FIG.2c) omitted.

With reference to FIG.5a through 5c, the electronic device 300 may include a first housing 310 and a second housing (e.g., a second housing 320 of FIG.2a) that are foldably coupled through a hinge structure (e.g., a hinge structure 340 of FIG.2b) (e.g., a hinge device). In one embodiment, the electronic device 300 may include a first display (e.g., a first display 330 of FIG. 3a) disposed to be supported by the first housing 310 and the second housing 320 and directed toward the first direction (e.g., z-axis direction), and the second display 400 (hereunder, 'display') disposed in the inner space 3101 of the first housing 310 to be viewed from the outside through the first rear cover (e.g., the first rear cover 314 of FIG. 4) and directed toward the second direction (e.g., -z-axis direction) opposite to the first direction. In some embodiments, the first display 330 and the second display 400 may be defined as including a first display portion (e.g., a first display area) facing the first direction and a second display portion (e.g., a second display area) facing the second direction by the first display 330 and the second display 400 being integrally formed and being disposed in a bending manner. In one embodiment, the electronic device 300 may include a camera module 308 and/or a battery 371 as at least one electronic component disposed around the first board assembly 361 (hereinafter, the 'board'), the board 361 that is disposed in the inner space 3101 of the first housing 319.In one embodiment, the electronic device 300 may include an auxiliary board 361-1 that is at least partially overlapped with board 361 in the inner space 3101 of the first housing 310. In one embodiment, the auxiliary board 361-1 may be disposed in a stacked manner through the board 361 and the interposer. In one embodiment, the auxiliary board 361-1 may be located between the board 361 and the display 400.

According to various embodiments, the display 400 may include a display panel 430, a subsidiary material layer 440 and/or a conductive sheet 450 (e.g., a metal sheet or sheet of other conductive material) that is sequentially disposed in such a manner that it is attached through an adhesive member P under the first rear cover 314. In one embodiment, the conductive sheet 450 may include an adherent Cu sheet. In such a case, the first rear cover 314 may include a window layer where at least a transparent overlapping area with the display panel 430 is formed. In one embodiment, the adhesive member P may include at least one of the optical clear adhesive (OCA), pressure sensitive adhesive (PSA), heat-reactive adhesive, plain adhesive, or double-sided tape. In one embodiment, the display panel 430 may include a plurality of pixels and a wiring structure (e.g., an electrode pattern). In some embodiments, the display panel 430 may include a polarized layer disposed on its upper surface. In one embodiment, the polarized layer may selectively pass light generated from a light source in display panel 430 and oscillating in a certain direction. In some embodiments, the display 400 may include a touch panel (not shown). In one embodiment, the subsidiary material layer 440 may include a polymer layer and/or a functional layer disposed under the display panel 430. In one embodiment, a polymer layer may be disposed under the display panel 430, providing a dark background for ensuring visibility of the display panel 430, and may be formed as a buffer material for buffering. In some embodiments, the polymer layer may be omitted or disposed under the conductive sheet 450. In one embodiment, the functional layer may include a graphite sheet for heat dissipation, an added display, a forcetouch FPCB, a fingerprint sensor FPCB, an antenna radiator for communication, a digitizer, or a conductive/non-conductive tape. Depending on the arrangement of other layers of the display 400, the conductive sheet 450 may be disposed on a rear surface of the display (as shown in FIG. 5c) or included as an intermediate layer of the display, such that one or more further layers follow (i.e. are on top of) the conductive sheet in a direction away from the display panel 430.

According to various embodiments, the display 400 may include a bending part 432 that is disposed in such a way that it folds from the display panel 430 to at least some area of the rear surface of the display 400 (e.g., in such a way that it is attached to a conductive sheet 450). In one embodiment, the bending part 432 may include an extension part 4321 extending from the display panel 430 and including a control circuit 4321a, and a flexible board 4322 (i.e. flexible circuit board) that is electrically connected to the extension part 4321 and including a plurality of electrical elements. In one embodiment, the control circuit 4321a may include a display driver IC (DDI) or a touch display driver IC (TDDI) mounted on an extension part 4321 having an electrical wiring structure. In one embodiment, the display 400 may include a chip-on-panel or chip-on-plastic (COP) structure in which the control circuit 4321a is disposed directly on the extension part 4321 of the bending part 432. In some embodiments, the display 400 may include a chip-on-film (COF) structure in which the control circuit 4321a is mounted on a separate connecting film (not shown) connecting the extension part 4321 of the bending part 432 to the flexible board 4322. In one embodiment, the display 400 may include a plurality of electrical elements disposed on flexible board 4322. In one embodiment, the display 400 may include connectors 433 extending from flexible board 4322 and electrically connecting to the board 361 of electronic device 300. In one embodiment, a plurality of electrical elements may include a touch IC, a flash memory for display, an ESD-protected diode, a pressure sensor, a fingerprint sensor, or a passive element. In one embodiment, the display 400 may be laminated on the outer surface of bending part 432 and may include a bending protection layer 4324 (e.g., a bending protection layer (BLP)) to protect at least a portion of bending part 432. In one embodiment, the extension part 4321 of the bending part 432 may be attached to the conductive sheet 450 on the rear surface of the display 400 through a first adhesive member T1. In one embodiment, the flexible board 4322 may be attached to the conductive sheet 450 through a second adhesive member T2. For example, the first adhesive member T1, as a tape member having a specified thickness, may serve as a spacer with a thickness to maintain the bend of the bending part 432 and to compensate for the height difference between the extension part 4321 and the flexible board 4322. In one embodiment, the first adhesive member T1 and/or the second adhesive member T2 may be formed of a waterproofing member (e.g., a waterproofing tape) because it is at least partially exposed to the outside. In one embodiment, the first adhesive member T1 may contain a material of PET, PI, or close type foam and PET combined. In one embodiment, the second adhesive member T2 may include a conductive tape for electrically connecting the ground of the flexible board 4322 to the conductive sheet 450. In some embodiments, the second adhesive member T2 may also have a compensating function to compensate for the height difference between the extension part 4321 and the flexible board 4322. In one embodiment, the control circuit 4321a disposed in extension part 4321 may be protected by a cover member 485 attached to cover from at least a portion of the flexible board 4322 to at least a portion of the extension part 4321. In one embodiment, at least a portion of the cover member 485 may be attached to the board through a third adhesive member T3. In one embodiment, the third adhesion member T3 may be formed of material substantially identical to the foregoing first adhesive member T1 and/or the second adhesive member T2.

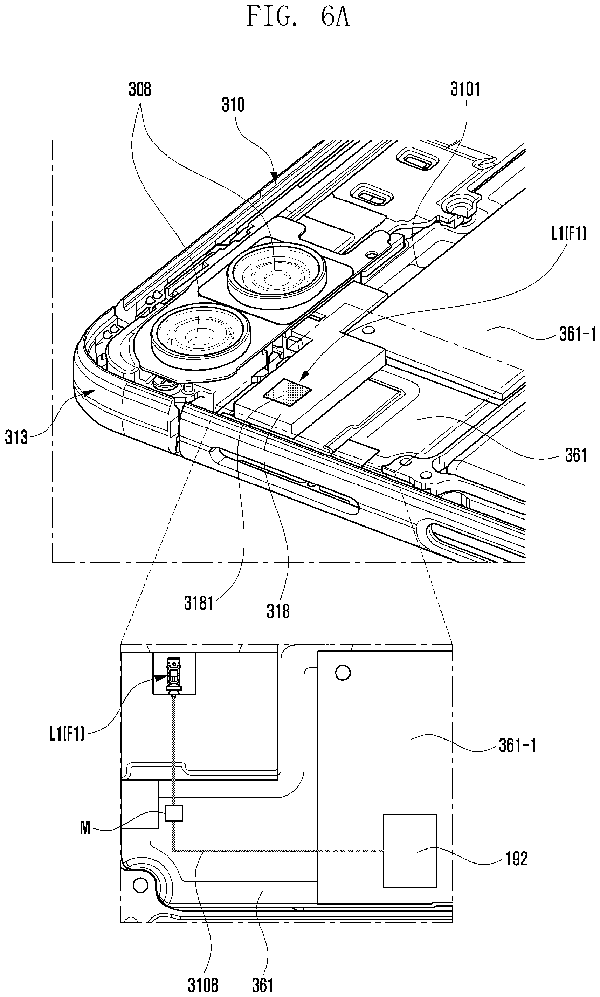

According to various embodiments, the electronic device 300 may include an antenna operating through at least a portion of the conductive sheet 450 attached under the display panel 430. In one embodiment, the electronic device 300 may include a first power feed unit F1 electrically connected to the wireless communication circuit of the board 361 (e.g., the wireless communication circuit 192 of FIG.6a) (e.g., the wireless communication module 192 of FIG. 1) at the first point L1 of the conductive sheet 450. In one embodiment, the electronic device 300 may include a support bracket 318 (e.g., a first support member 3131 of FIG. 4) disposed between the board 361 and the display 400 in the inner space 3101. In one embodiment, the support bracket 318 may be used as an antenna carrier to accommodate at least one antenna pattern (e.g., a laser direct structuring pattern (LDS)) in the inner space 3101 of the first housing 310, or as a support structure to support boards 361 and 361-1 or other electrical structures. In one embodiment, the conductive sheet 450 may be electrically connected to the wireless communication circuit 192 of the board 361 through the conductive extension part 3181a disposed to at least partially penetrate the support bracket 318 (e.g., an antenna carrier or a support member), the conductive pad 3181 electrically connected to the conductive extension, and the conductive contact 3182 (e.g., C-clip) electrically connected to the conductive extension 318a. In one embodiment, the conductive extension part 3181a may include a conductive vias penetrating at least a portion of the support bracket 318, and the conductive pad 3181 may be electrically connected to the conductive extension part 3181a and be formed to have a specified thickness on the outer surface of the support bracket 318. In one embodiment, if a portion of the conductive extension part 3181a is exposed to the outer surface of the support bracket 318, the conductive pad 3181 may be omitted. In one embodiment, the electronic device 300 may include a ground part G1 that is electrically connected to the ground G of board 361 at the second point L2 spaced apart from the first point L1 at a predetermined interval. In one embodiment, the ground part G1 may be electrically connected to the bending part 432 and may be formed through the connector 433 used for the transmission of the control signal of the display 400. In this case, the connector 433 may electrically connect the ground G of the board 361 to the conductive sheet 450, through a conductive connection member 4331, at the second point L2. In one embodiment, the conductive connection member 4331 may include at least one of the metal material, the conductive tape, the conductive foam, or the conductive contact (e.g., C-clip). In some embodiments, the ground part G1 may be formed in substantially the same manner as the power feed unit F1, through a support bracket 318 and a conductive contact 3182 including a conductive extension part 3181a and a conductive pad 3181. In some embodiments, the configuration of the ground part G1 may be omitted. In one embodiment, the antenna may operate in a specified frequency band (e.g., about 400 MHz ~ about 6000 MHz) by inducing a change in the flow of current applied to the conductive sheet 450 through the placement position of the ground part G1.

FIG. 6a is a partial configuration diagram of the electronic device illustrating the electrical connection structure between a wireless communication circuit and a power feed unit according to various embodiments of the present disclosure.

With reference to FIG.6a, the electronic device 300 may include a power feed unit F1 electrically connecting the wireless communication circuit 192 of the conductive sheet 450 and the board 361 through the conductive pad 3181 disposed on the support bracket 318 that is disposed in the inner space 3101 of the first housing 310, the conductive extension part 3181a, and the conductive contact 3182 (e.g., C-clip) electrically connecting the conductive extension part 3181a and the board 361. In one embodiment, the power feed unit F1 may be electrically connected to the wireless communication circuit 192 disposed at a distance from the power feed unit F1 through an electrical path 3108 (e.g., a wiring path) disposed on the board 361. In one embodiment, the wireless communication circuit 192 may be disposed on the auxiliary board 361-1 which is electrically connected to the board 361 through an interposer. In one embodiment, the electronic device 300 may help to shift the operating frequency band of the antenna or to expand the bandwidth of the operating frequency by including a matching circuit M (e.g., a tunable element (capacitor and/or inductor) or a tunable IC) deployed along the electrical path 3108.

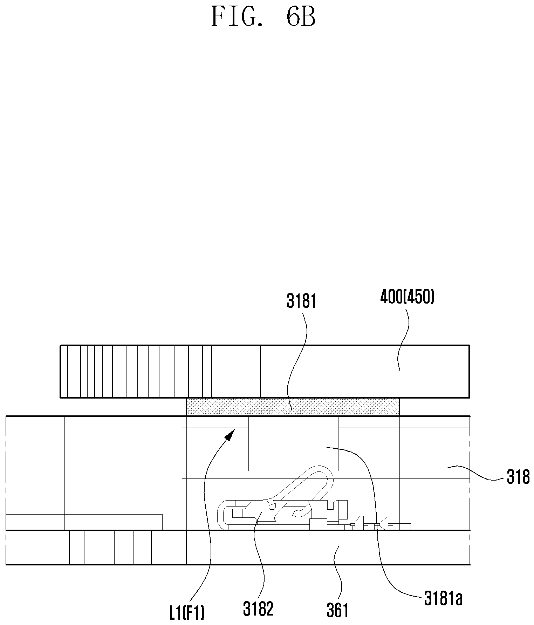

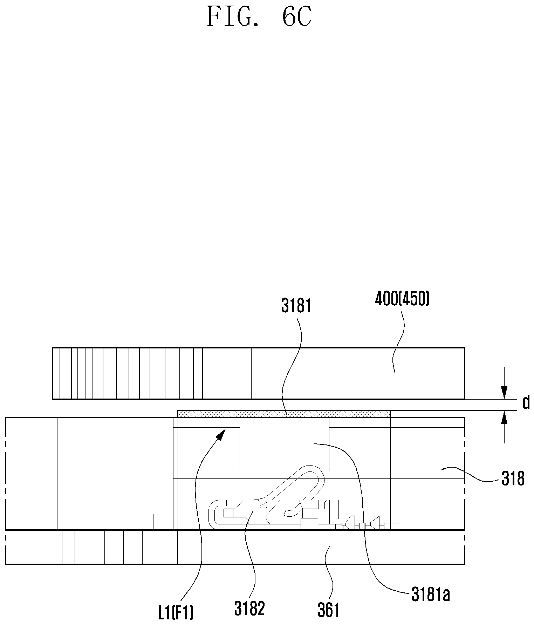

FIGS. 6b and 6c are a partial cross-sectional view of the electronic device illustrating the electrical connection structure of a conductive sheet and a board according to various embodiments of the present disclosure.

With reference to FIG. 6b, the conductive sheet 450 of the display 400 may form the first power feed unit F1 by being electrically connected to the wireless communication circuit 192 of the board 361 through the conductive pad 3181 disposed on the support bracket 318, the conductive extension part 3181a, and the conductive contact 3182 connecting the conductive extension part 3181a and the board 361. In such a case, the conductive pad 3181 may be in direct contact with the conductive sheet 450 (e.g., the direct feeding method).

With reference to 6c, in the configuration of 6b, the conductive sheet 450 of display 400 may be electromagnetically connected to conductive pad 3181 in a capacitively coupled manner (e.g., the indirect feeding method) via a predetermined interval d.

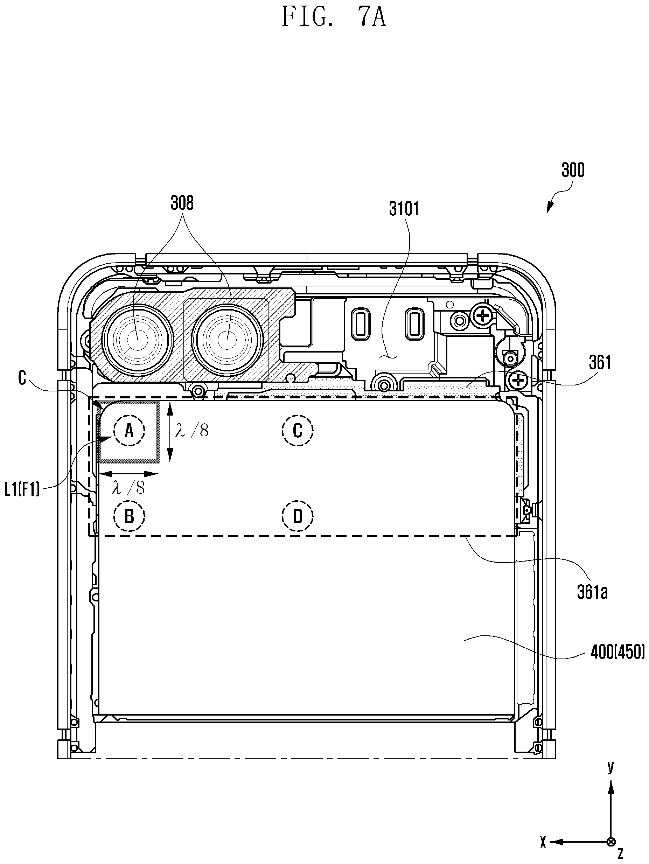

FIG. 7a is a diagram for illustrating the power feed point of the conductive sheet in an electronic device according to various embodiments of the present disclosure.

With reference to FIG.7a, the electronic device 300 may include a first housing 310 and a second housing (e.g., a second housing 320 of FIG.2a) that are foldably coupled through a hinge structure (e.g., a hinge structure 340 of FIG.2b) (e.g., a hinge device). In one embodiment, the electronic device 300 may include a board 361 (e.g., circuit board) disposed in the first housing 310. In one embodiment, the electronic device 300 may include a first display (e.g., a first display 330 of FIG. 3a) disposed to be supported by the first housing 310 and the second housing 320 and directed toward the first direction (e.g., z-axis direction), and a display 400 (e.g., a second display) disposed in the inner space 3101 of the first housing 310 to be viewed from the outside through the first rear cover (e.g., the first rear cover 314 of FIG. 4) and directed toward the second direction (e.g., -z-axis direction) opposite to the first direction. In one embodiment, the electronic device 300 may include a power feed unit F1 electrically connected to a wireless communication circuit (e.g., a wireless communication circuit 192 of FIG.6a) (e.g., a wireless communication module 192 of FIG. 1) disposed on the board 361 at the point L1 of the rectangular shape conductive sheet 450. For example, the power feed unit F1 may be disposed in the A area near or extending from the corner C of one side of the conductive sheet 450 of the display 400. In one embodiment, the A area in which the power feed unit F1 is located may be defined as a square-shaped area (e.g., a square area) having a horizontal length of about λ/8 (-x-axis direction) and having a vertical length of about λ/8 (-y-axis direction). The square-shaped area may be located in a corner C of the conductive sheet 450 such that a first horizontal side of the A area approximately coincides (i.e. shares an edge) with a first horizontal edge of the conductive sheet 450 and a first vertical side of the A area that is adjacent to (i.e. adjoins) the first horizontal side of the A area coincides (i.e. shares an edge) with a first vertical side of the conductive sheet 450 that is adjacent to (i.e. adjoins) the first horizontal side of the conductive sheet 450. Expressed in an alternative manner, if the conductive sheet is rectangular, the A area may be a square-shaped area that extends from a first corner of the conductive sheet by λ/8 in a first direction towards a second corner adjacent to the first corner and by λ/8 in a second direction towards a third corner adjacent to the first corner. The antenna may be induced to make greater use of the operating frequency band through the layout of the A area of this power feed unit F 1.

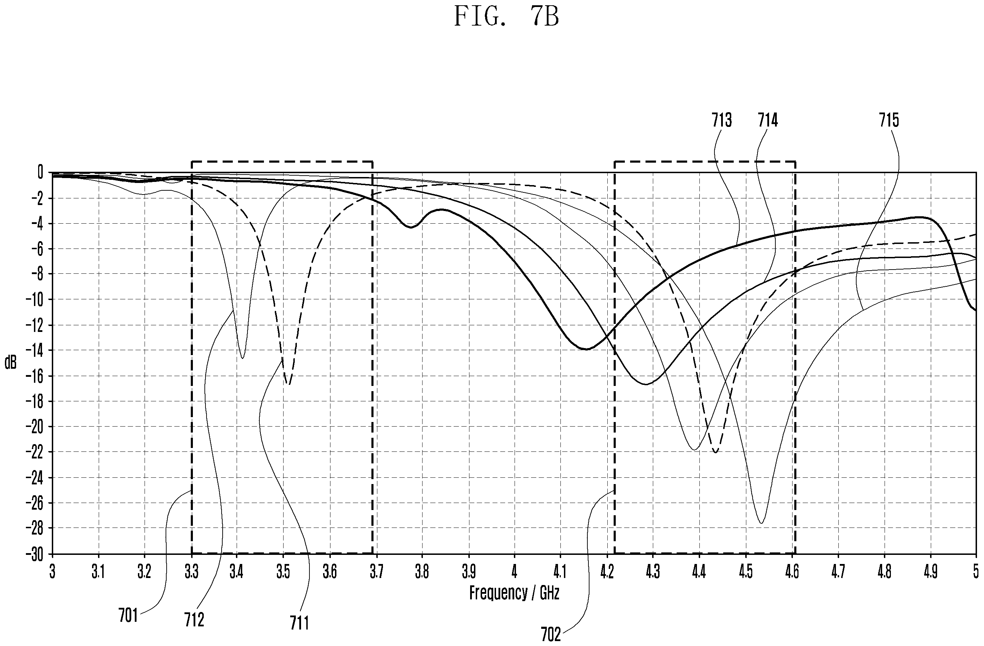

FIG. 7b is a graph comparing the radiation performance of the antenna according to the power feed point of the conductive sheet at FIG.7a according to various embodiments of the present disclosure.

With reference to FIG. 7b, it can be seen that, whereas a dual resonance is formed in the first frequency band 701 (e.g., about 3.3 GHz ~ about 3.7 GHz) and in the second frequency band 702 (e.g., about 4.2 GHz ~ about 4.6 GHz) in the case of the direct feeding (graph 711) or indirect feeding (graph 712) when the power feed unit F1 is disposed in the area A of the conductive sheet 450 of FIG.7a, a single resonance of the antenna is formed only in the second frequency band when the power feed unit F1 is disposed in the B area (graph 713), C area (graph 714), and D area (graph 715), which are each outside of the area A. This means that if the power feed unit F1 is disposed in a square shape area with a length of about λ/8 on each side with respect to one corner C of the conductive sheet 450, the antenna may have better radiation performance than if the power feed unit F1 is disposed outside such an area i.e. not located approximately in a corner of the conductive sheet 450. In other words, if the power feed unit F is connected to the conductive sheet 450 (i.e. location L1 is) within approximately a λ/8 radius of a corner of the conductive sheet 450, the antenna may have better radiation performance than if the power feed unit F1 is connected outside of such an area. Although the area A has been described with dimensions of approximately λ/8, it is not limited to theses dimensions, for example, the area A may have dimensions smaller than λ/8. Furthermore, although the area A has been predominantly described as square-shaped, it may also take other shapes having dimensions of approximately λ/8 with respect the corner of the conductive sheet and that result in similar antenna characteristics to those described above. Furthermore, although a specific corner C is illustrated in FIG.7a, the area A may be defined with respect to any corner of the conductive sheet 450.

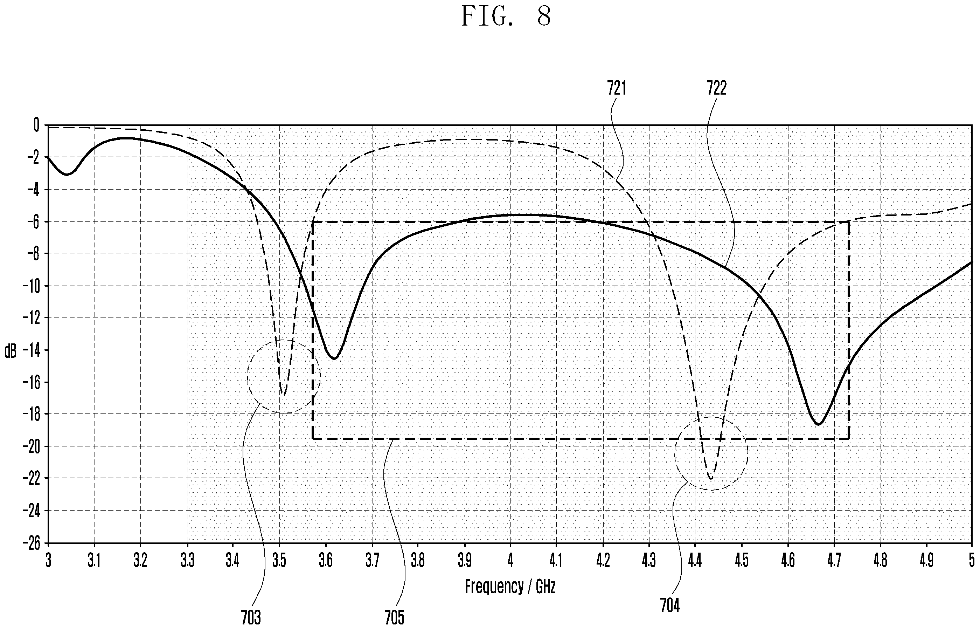

FIG. 8 is a graph comparing the bandwidth features of the antennas according to various embodiments of the present disclosure.

With reference to FIG. 8, it can be seen that the antenna using the conductive sheet 450, for example, can operate in the first frequency band 703 (e.g., about 3.5 GHz) and the second frequency band 704 (e.g., about 4.4 GHz), respectively, (with respect to -6dB operating range) when only the power feed unit F1 (in location L1) is electrically connected to the wireless communication circuit 192 of the board 361 (graph 721), but, the antenna, for example, can operate with a relatively wide bandwidth (area 705) (e.g., about 3.6 GHz ~ about 4.7 GHz) (with respect to -6dB operating range) when the antenna includes the ground part G1 that is spaced apart from the feed unit F1 and electrically connected to the ground G of the board 361 (graph 722). In this case, the bandwidth of the antenna may be appropriately regulated through a matching circuit M disposed in the electrical path 3108 connecting the power feed unit F1 and the wireless communication circuit 192.

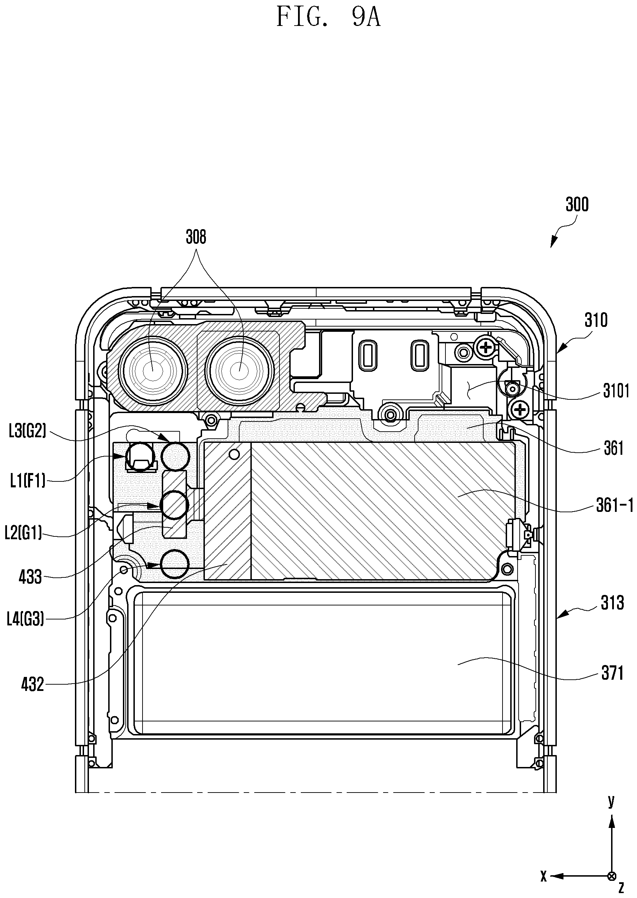

FIG. 9a is a diagram for illustrating the location of the ground part of a conductive sheet in an electronic device according to various embodiments of the present disclosure.

In the description of the electronic device 300 of FIG. 9a, the same numerals are assigned to substantially the same components as those of the electronic device 300 of FIG.5b, and the detailed description thereof may be omitted.

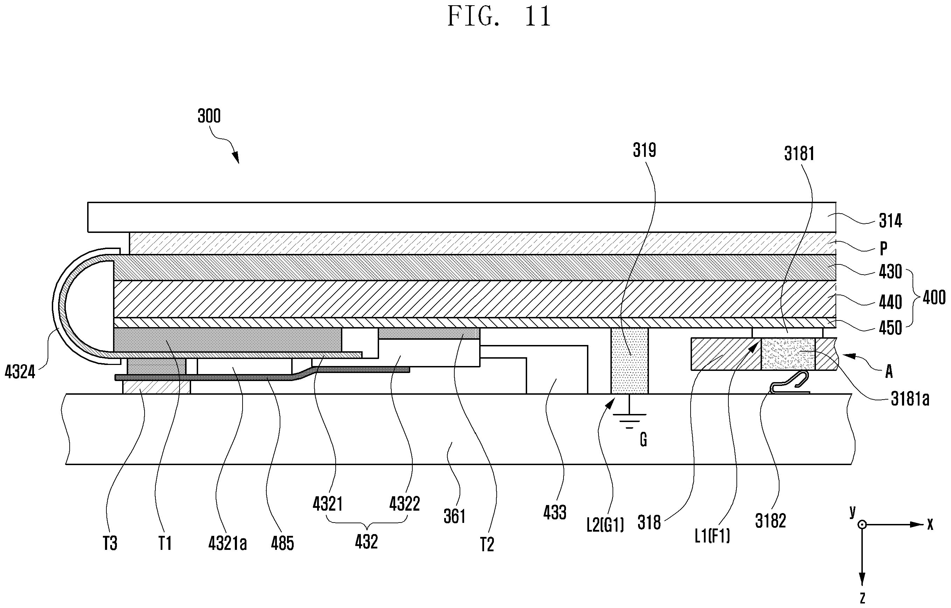

With reference to FIG. 9a, the electronic device 300 may include a power feed unit F1 electrically connected to the wireless communication circuit of the board 361 (e.g., the wireless communication circuit 192 of FIG.6a) at the first point L1 of the conductive sheet 450. In one embodiment, electronic device 300 may include a first ground part G1 that is electrically connected to the ground G of the board 361 at a second point L2 of the conductive sheet 450 spaced apart at a predetermined interval from the first point L1. In some embodiments, the first ground part G1 may be replaced by a second ground part G2 disposed at a third point L3 of the conductive sheet 450 closer to the first point L1 than the second point L2. In some embodiments, the first ground part G1 may be replaced by a third ground portion G3 disposed at a fourth point L4 of the conductive sheet 450, farther than the second point L2 from the first point L1. For example, an antenna using a conductive sheet 450 of display 400 may have variable radiation features (e.g., the shift of the operating frequency band) depending on the separation distance of the ground part G1, G2, and G3 from the power feed unit F1 (i.e. the separation of point L1 from L2, L3, and L4). In one embodiment, the ground part G1 spaced away from the power feed unit F1 may be changed depending on the location of the connector 433. For example, the second ground part G2 or the third ground part G3 may enable the conductive sheet 450 to be electrically connected to the ground G of the board 361 in the third point L3 or the fourth point L4 by the connector 433 being changed to the location of the second ground part G2 or the third ground part G3 through the shape change of the connector 433 located on the first ground part G1. In some embodiments, the first ground part G1, the second ground part G2, or the third ground part G3 may, without the use of connector 433, enable the conductive sheet to be electrically connected to the ground G of the board 361, at the corresponding location, by changing the location of the separately disposed conductive connection member (e.g., the conductive connection member 319 of FIG. 11). In some embodiments, the first ground part G1, the second ground part G2, and/or the third ground part G3 may be all disposed on the conductive sheet 450, and one of those ground parts may be selectively connected to the ground G of the board 361 through the switching circuit in order to control a bandwidth of the antenna.

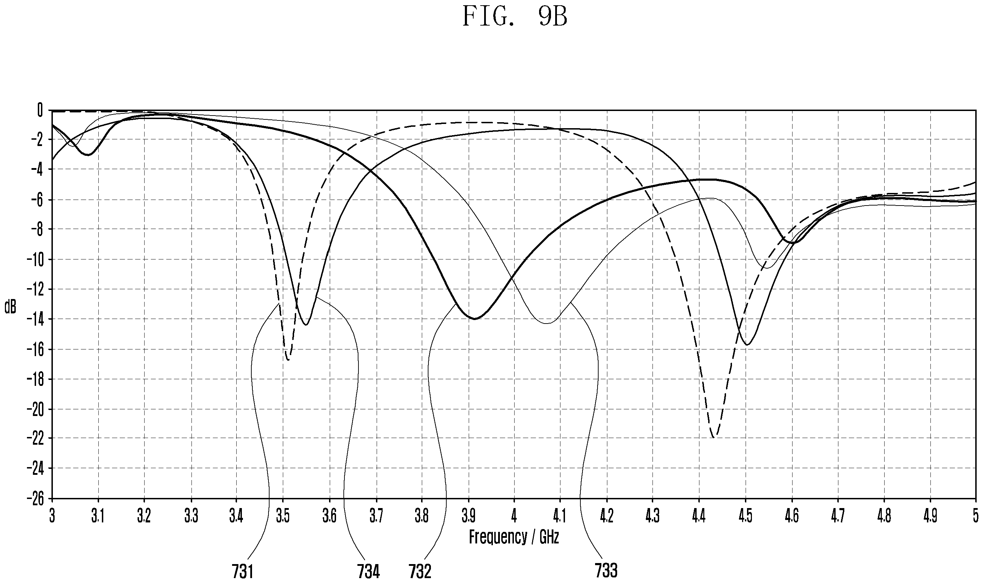

FIG. 9b is a graph illustrating the frequency features of the antenna according to the ground location of the conductive sheet of FIG. 9a according to various embodiments of the present disclosure.

With reference to FIG. 9b, when a ground part is not applied i.e. not connected to the conductive sheet 450 (graph 731), the antenna using the conductive sheet 450 of the display 400 may operate in the first frequency band (about 3.5 GHz) of the N77 band (e.g., 3.3 GHz to 4.2 GHz). In one embodiment, it can be seen that, when the first ground part G1 is located at the second point L2 spaced from the power feed unit F1 (graph 732), the antenna operates in the second frequency band (e.g., about 3.9 GHz band) of the N77 band; when the first ground part G1 is replaced by the second ground part G2 located at the third point L3, which is closer from the power feed unit F1 than the second point L2 (graph 733), the antenna operates in the third frequency band (e.g., about 4. 1GHz band), which is higher than the second frequency band in the N77 band; and when the first ground part G1 is replaced by the third ground part G3 located at the fourth point L4, which is farther than the second point L2 from the power feed unit F1 (graph 734), the antenna operates in the fourth frequency band (e.g. about 3.55GHz band), which is lower than the second frequency band in the N77 band. For example, it can be seen that the ground part G1 shifts an operating frequency of the antenna lower as the distance from the power feed unit F1 (i.e. L1) increases, and shifts an operating frequency of the antenna higher as it gets closer to the power feed unit F1. This may mean that the resonance of the antenna can be controlled in a desired frequency band (e.g., N77 band) depending on the distance of the ground part (e.g. G1, G2, G3) from the power feed unit F 1. Although the ground parts have been shown to be disposed in particular positions in FIG. 9a, they are not limited these positions and may be disposed at any position on the conductive sheet 450 depending on the desired frequency characteristics of the antenna.

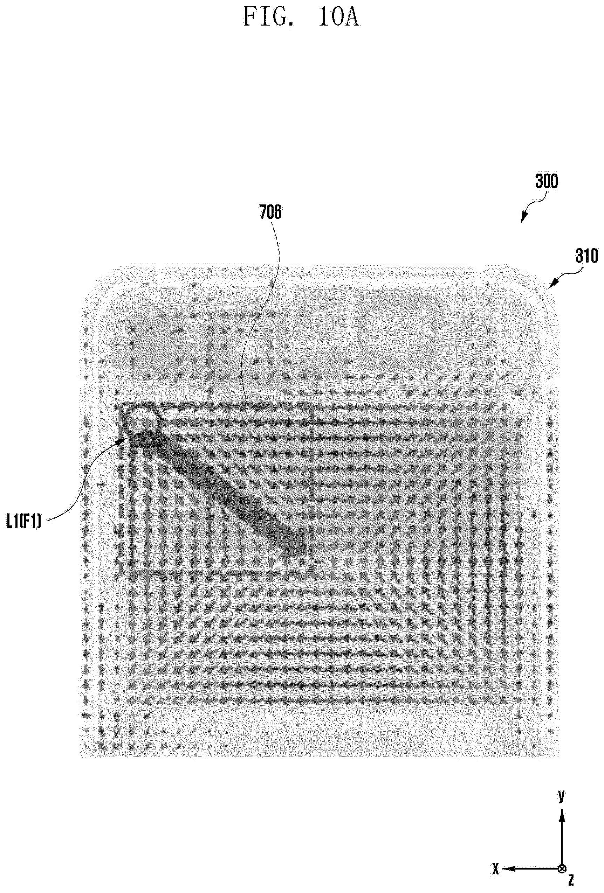

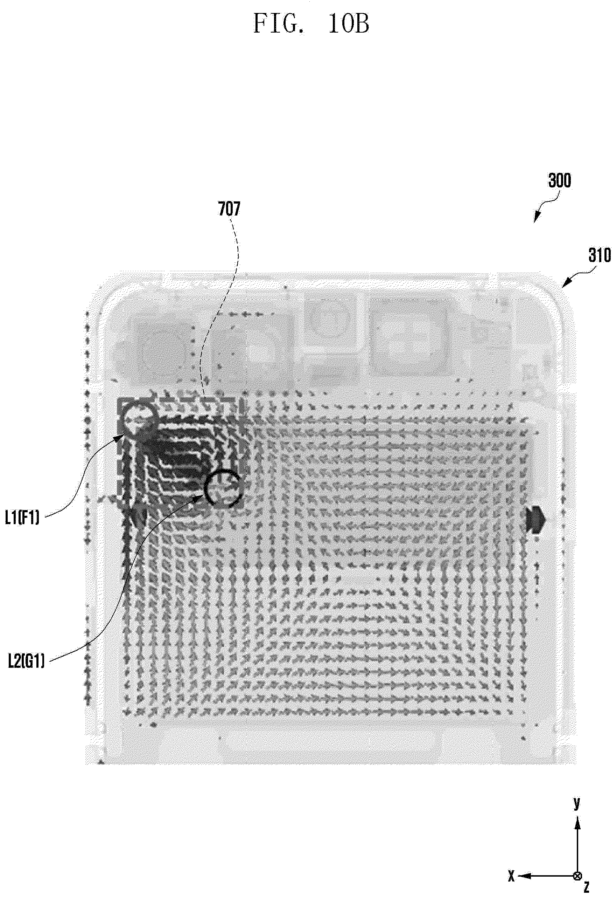

FIGS. 10a and 10b are diagrams comparing the current distribution of antennas with or without a ground part according to various embodiments of the present disclosure.

With reference to FIG. 10a, the antenna using the conductive sheet 450 of the display 400 may resonate through the first current distribution area 706 of the square or rectangular shape of the specified area from one corner of the conductive sheet 450 when ground is not applied.

With reference to FIG. 10b, the antenna using the conductive sheet 450 of the display 400 may resonate through the second current distribution area 707 that is smaller than the first current distribution area 706 by the ground part G1 when it includes the ground part G1 located at the second point L2 spaced apart from the power feed unit F1. This may mean that the resonance of the antenna can be controlled depending on the ground part G1 spaced apart from the power feed unit F1.

FIG. 11 is a partial cross-sectional view of the electronic device according to various embodiments of the present disclosure.

In the description of the electronic device 300 of FIG. 11, the same numerals are assigned to substantially the same components as those of the electronic device 300 of FIG.5c, and the detailed description thereof may be omitted.

With reference to FIG. 11, the ground part G1 may include a separate conductive connection member 319 other than the connector 433 of the bending part 432 extending from the display panel 430. For example, the conductive connection member 319 may be disposed between the display 400 and the board 361 to connect the ground G of the conductive sheet 450 and the board 361. In one embodiment, the conductive connection member 319 may include at least one of a metal material, a conductive tape, a conductive foam, or a conductive contact (e.g., C-clip).

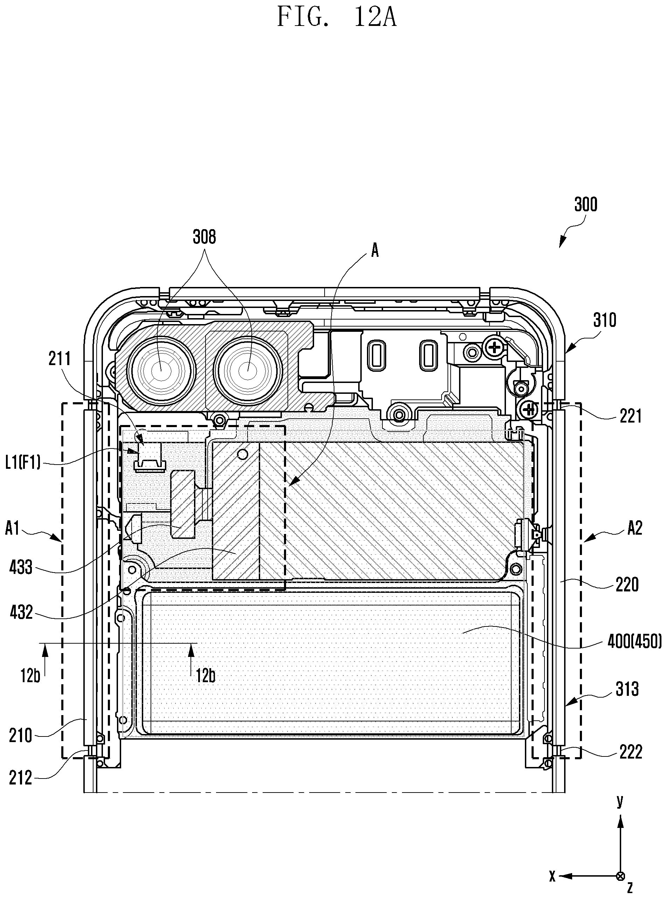

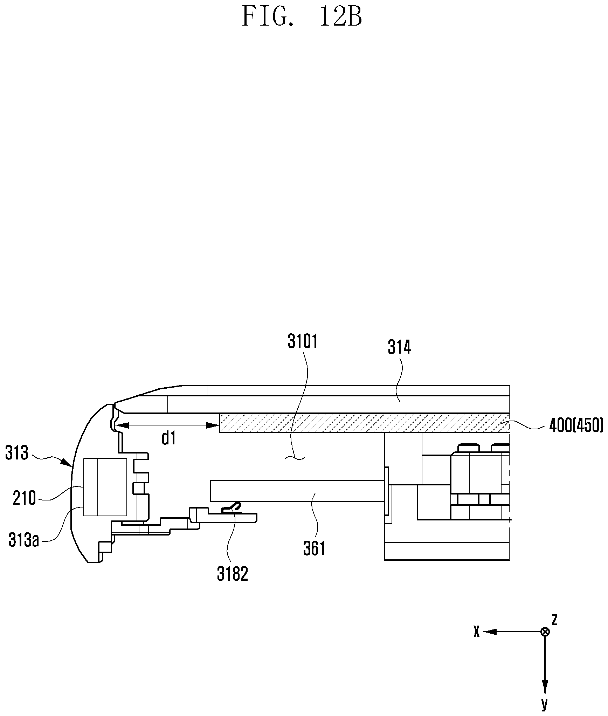

FIG. 12a is a partial configuration diagram of the electronic device including bezel antennas according to various embodiments of the present disclosure. FIG. 12b is a partial cross-sectional view of the electronic device taken along line 12b-12b of FIG. 12a according to various embodiments of the present disclosure.

In the description of the electronic device 300 of FIG. 12a, the same numerals are assigned to substantially the same components as those of the electronic device 300 of FIG.5b, and the detailed description thereof may be omitted.

With reference to FIG. 12a and 12b, the electronic device 300 may include a first housing 310 and a second housing (e.g., a second housing 320 of FIG.2a) that are foldably coupled through a hinge structure (e.g., a hinge structure 340 of FIG.2b) (e.g., a hinge device). In one embodiment, the electronic device 300 may include a display 400 that is disposed in the inner space 3101 of the first housing 310 so that it can be viewed from the outside through the first rear cover 314. In one embodiment, the electronic device 300 may include a first antenna A operating through a power feed unit F1 that is electrically connected to the wireless communication circuit of the board 361 (e.g., the wireless communication circuit 192 of FIG.6a) at the first point L1 of the conductive sheet 450.

According to various embodiments, the electronic device 300 may include a first lateral member 313 forming the side surface of the first housing 310 and being formed of a conductive material 313a. In one embodiment, the first lateral member 313 may include a first conductive member 210 segmented through a spaced pair of segmentation portions 211 and 212, and a second conductive member 220 segmented through another pair of segmentation portions 221 and 222 such that the segments of the conductive portions are conductively isolated from one another. In one embodiment, the first conductive member 210 may be operated as a second antenna A1 by being electrically connected to the wireless communication circuit of the board 361 (e.g., the wireless communication module 192 of FIG. 1) through the conductive contact 3182. In one embodiment, the second conductive member 220 may also be operated as the third antenna A2 through substantially the same connection structure as the second antenna A1. For example, the second antenna A1 and/or the third antenna A2 may operate in at least one of the frequency bands in the range of about 400 MHz ~ about 6000 MHz. In one embodiment, the conductive material 313a of the first conductive member 210 and/or the second conductive member 220 may be disposed to have a predetermined separation distance d1 from the conductive sheet 450 of the display 400. For example, the separation distance d1 may be about 2 mm or more.

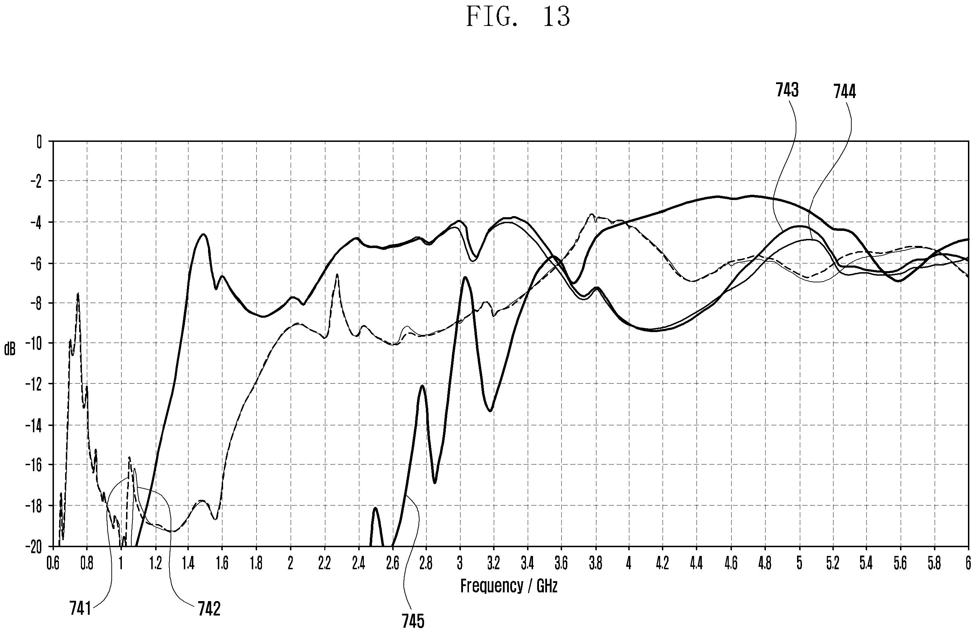

FIG. 13 is a graph comparing the performance of bezel antennas with or without an antenna A formed from the conductive sheet 450 according to various embodiments of the present disclosure.

With reference to FIG. 13, it can be seen that there is substantially no change in the radiation performance (graph 741) of the second antenna A1 when the first antenna A is not present and the radiation performance (graph 742) of the second antenna A1 when the first antenna A is present. In addition, it can be seen that there is substantially no change in the radiation performance (graph 743) of the third antenna A2 when the first antenna A is not present and the radiation performance (graph 744) of the third antenna A2 when the first antenna A is present. In addition, it can be seen that the first antenna A using the conductive sheet 450 of the display 400 operates in a different frequency band from the second antenna A1 and the third antenna A2 (graph 745). This may mean that even though the electronic device 300 includes an antenna A using a conductive sheet 450 of the display 400, it does not affect the radiation performance of at least one bezel antenna A1 and A2 using a portion of the lateral member 313 and can operate smoothly.

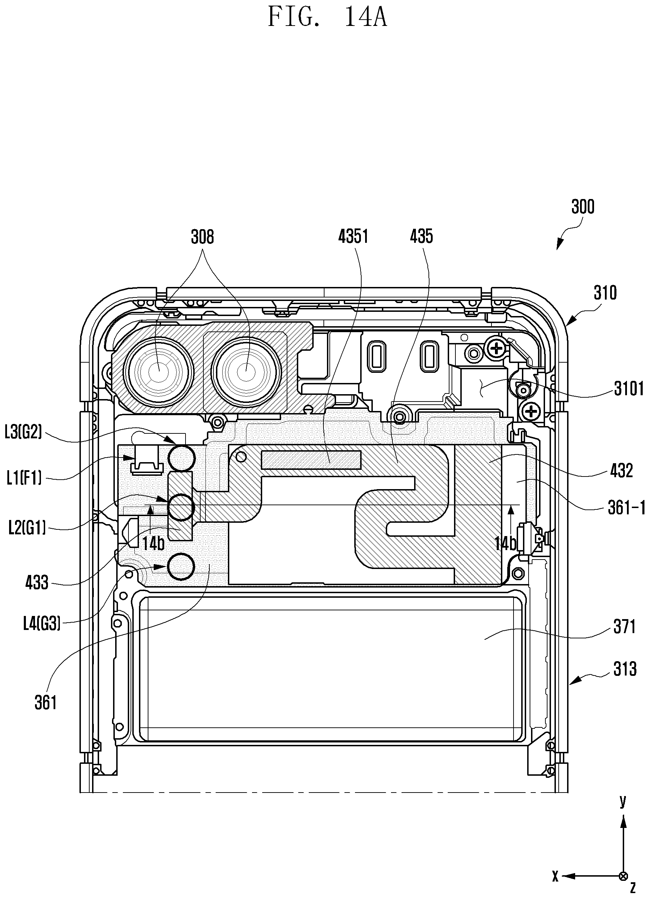

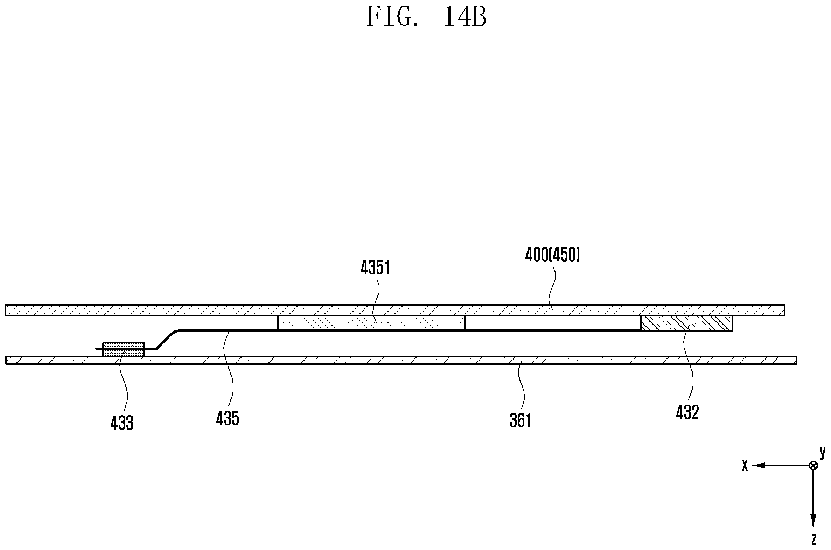

FIG. 14a is a partial configuration diagram of the electronic device including connector cables according to various embodiments of the present disclosure. FIG. 14b is a partial cross-sectional view of the electronic device taken along line 14b-14b of FIG. 14a according to various embodiments of the present disclosure.

In the description of the electronic device 300 of FIG. 14a, the same numerals are assigned to substantially the same components of the electronic device 300 of FIG. 9a, and the detailed description thereof may be omitted.

With reference to FIGS. 14a and 14b, the display 400 may include a connector cable 435 connecting the bending part 432 and the connector 433 in the design structure of the electronic device 300. Such connector cable 435 may be disposed to be overlapped with the conductive sheet 450 of the display 400, and the conductive lines and/or ground planes included in the connector cable 435 may result in coupling with the conductive sheet, which may affect the radiation features of the antenna to be determined by the ground part G1.

In an illustrative embodiment of the present disclosure, the connector cable 435 may help to determine the radiation features of the antenna formed from the conductive sheet 450 usingthe ground part G1 by including a grounding pad 4351 electrically connected to the conductive sheet 450. In one embodiment, the grounding pad 4351 may be electrically connected to ground G of the board 361 through the connector 433.

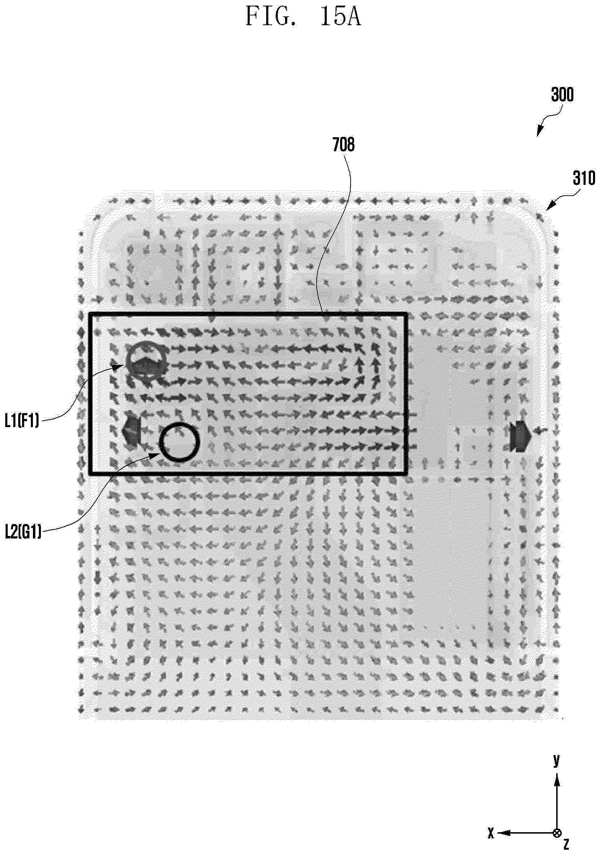

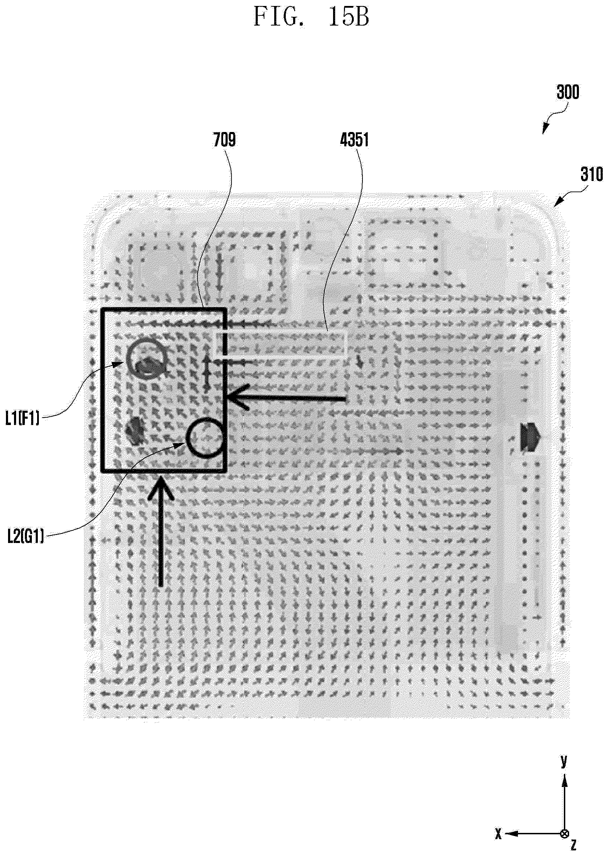

FIGS. 15a and 15b are diagrams comparing the current distribution of the antenna with or without a grounding pad in FIG. 14a according to various embodiments of the present disclosure.

With reference to FIG. 15a when a connector cable 435 is present but a grounding pad 4351 is not present, an unintentional resonance may be generated in the antenna of the conductive sheet 450 in first current distribution area 708, where the current distribution area 708 from the power feed unit F1 extends to at least a portion of the area overlapping with the connector cable 435 regardless of the ground part G1. However, the antenna may resonate through a second current distribution area 709 that is smaller than the first current distribution area 708 when the grounding pad 4351 is applied to the connector cable 435. This may mean that even though the connector cable 435 is disposed to be overlapped with the conductive sheet 450, the resonance of the antenna may be smoothly controlled by ground part G1 spaced apart from the power feed unit F1 through introducing a grounding pad 4351.

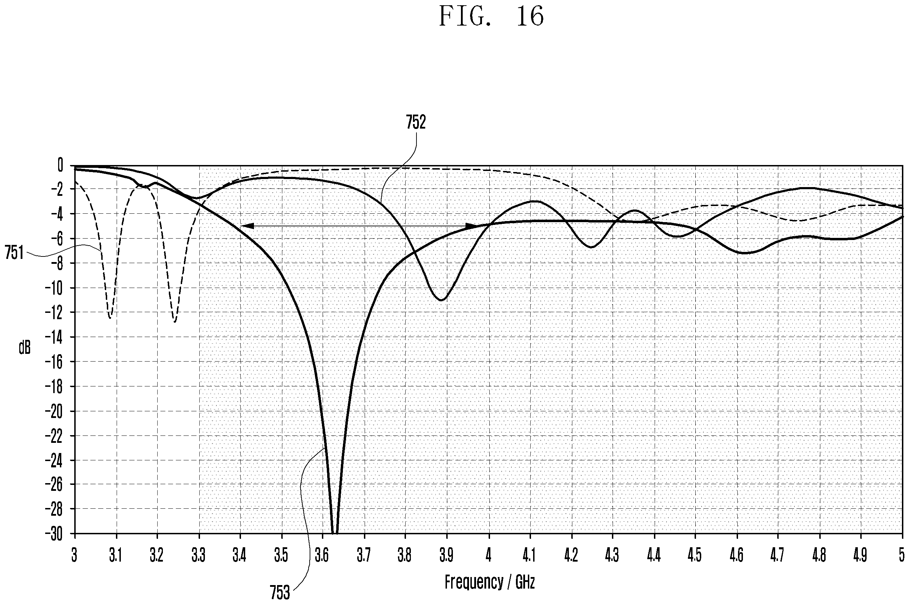

FIG. 16 is a graph comparing the radiation features of the antenna with or without a grounding pad in FIG. 14a according to various embodiments of the present disclosure.

With reference to FIG. 16, it can be seen that the antenna using the conductive sheet 450 of the display 400 is operated in a relatively wide bandwidth (e.g., about 3.4 GHz ~ about 4 GHz) when the grounding pad 4351 is applied to the connector cable 435 and the ground part G1 is additionally applied (graph 753) compared to when only the power feed unit F1 is applied (graph 751) and when only the grounding pad 4351 is applied to the connector cable 435 (graph 752).

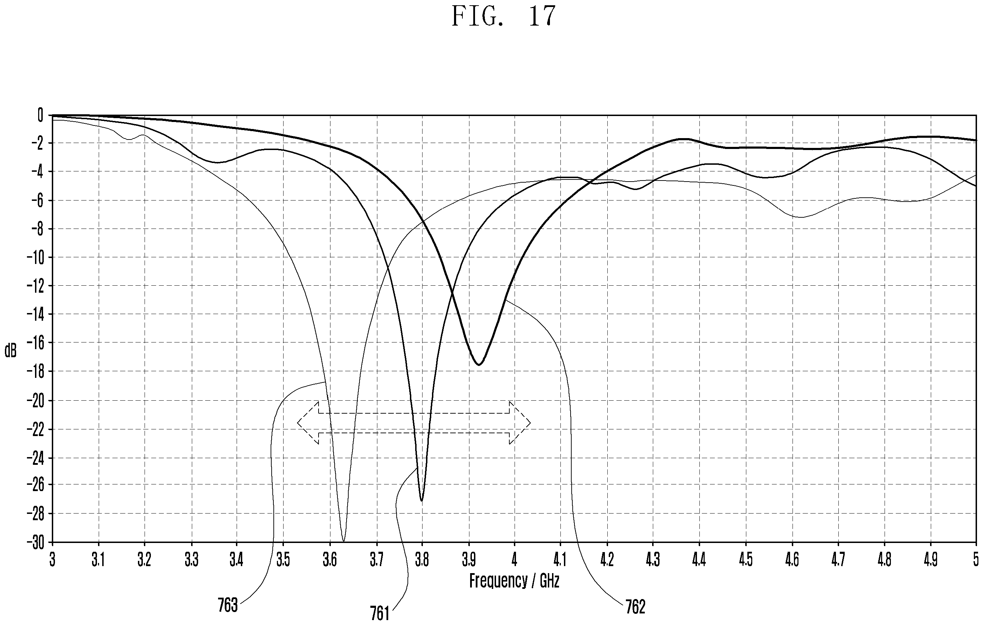

FIG. 17 is a graph comparing the frequency features of the antenna according to the location of the grounds parts (G1, G2, G3) in FIG. 14a when a grounding pad 4351 is present according to various embodiments of the present disclosure.

With reference to FIG. 17, it can be seen that, when the first ground part G1 is located at the second point L2 spaced away from the power feed unit F1 that is located at the first point L1 (graph 761), the antenna utilizing the conductive sheet 450 of the display 400 and a grounding structure in which a portion of the connector cable is grounded through the grounding pad, operates in the first frequency band (e.g., about 3.8GHz band) of the N77 band; when the first ground part G1 is replaced by the second ground part G2 located at the third point L3, which is closer from the power feed unit F1 than the second point L2 (graph 762), the antenna operates in the second frequency band (e.g., about 3.9 GHz band) of the N77 band, which is higher than the first frequency band of the N77 band; and when the first ground part G1 is replaced by the third ground part G3 located at the fourth point L4, which is farther than the second point L2 from the power feed unit F1 (graph 763), the antenna operates in the third frequency band (e.g. about 3.63GHz band), which is lower than the first frequency band in the N77 band. For example, it can be seen that even though the connector cable 435 is disposed overlapping with the conductive sheet 450, through the grounding structure of the grounding pad 4351, the ground part G1 shifts low as the distance from the power feed unit F1 increases, and shifts high as it gets closer to the power feed unit F1. This may mean that even though the connector cable 435 is disposed overlapping with the conductive sheet 450, the grounding pad 4351 means the resonance of the antenna can be controlled in the desired frequency band (e.g., N77 band) depending on the separation distance of the ground part G1 spaced from the power feed unit F1 and electrically connected to the ground G of the board 361 through the connector 433. The connector cable as been stated as overlapping the conductive sheet, and thus refers to the connector cable being directly adjacent to the conductive sheet or where the connector cable is separated from the conductive sheet by one or more intermediate layers.

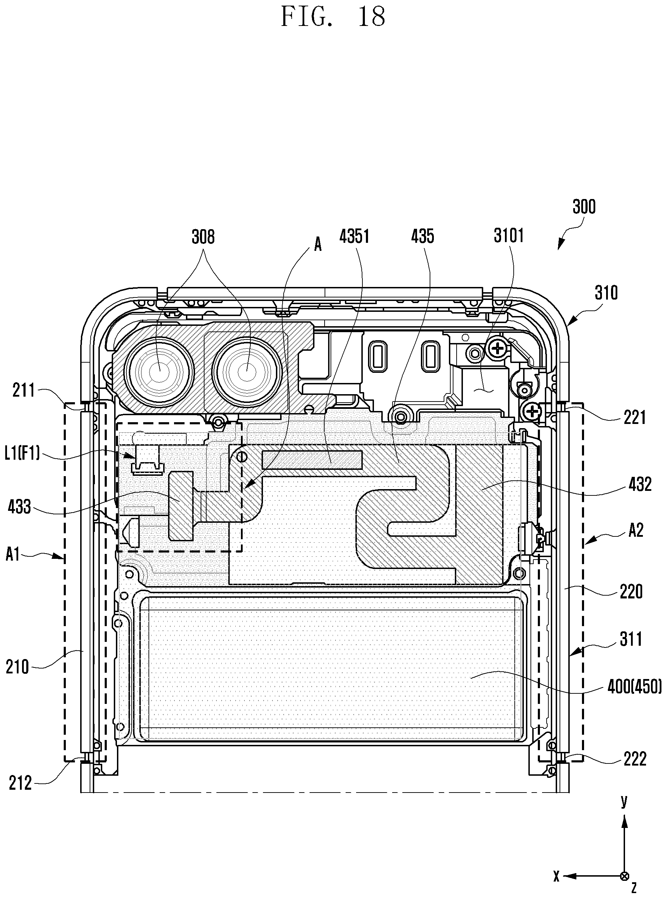

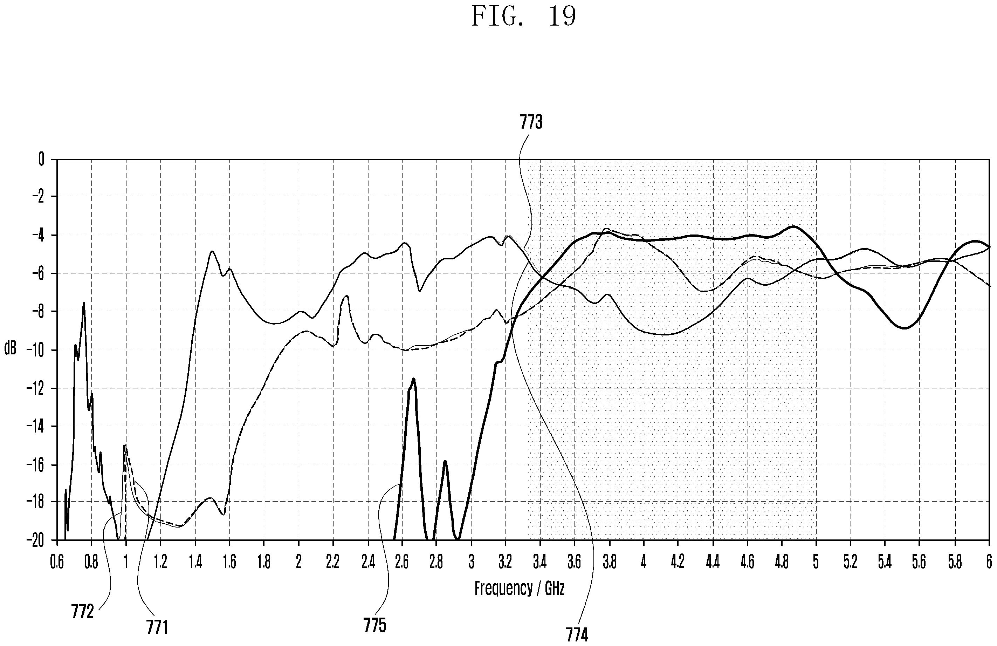

FIG. 18 is a partial diagram of the electronic device including bezel antennas according to various embodiments of the present disclosure. FIG. 19 is a graph comparing the performance of bezel antennas with or without an antenna including a grounding pad of FIG. 18 according to various embodiments of the present disclosure.

In the description of the electronic device 300 of FIG. 18, the same numerals are given to substantially the same components as those of the electronic device 300 of FIG. 12a, and the detailed description thereof may be omitted.

With reference to FIG. 18, the electronic device 300 may include a first antenna A with a grounding structure in which a portion of the connector cable 435 connecting the bending part 432 and the connector 433 is electrically connected to the conductive sheet 450 through the grounding pad 4351. In one embodiment, the electronic device 300 may include a second antenna A1 (e.g., a second bezel antenna) and/or a third antenna A2 (e.g., a third bezel antenna) formed through at least a portion of the first lateral member 313 of the first housing 310.

With reference to FIG. 19, it can be seen that there is no change in the radiation performance (graph 771) of the second antenna A1 when the first antenna A of FIG. 19 is not present and the radiation performance (graph 772) of the second antenna A1 when the first antenna A is present. In addition, it can be seen that there is no change in the radiation performance (graph 773) of the third antenna A2 when the first antenna A is not present and the radiation performance (graph 774) of the third antenna A2 when the first antenna A is present. In addition, it can be seen that the first antenna A with the grounding structure of the connector cable 435 using the conductive sheet 450 of the display 400 operates in a different frequency band from the second antenna A1 and the third antenna A2 (graph 775). This may mean that even though the connector cable 435 is disposed overlapping with the conductive sheet 450, the first antenna A1 including the grounding structure of the grounding pad 4351 does not affect the radiation performance of at least one bezel antenna A1 and A2 using a portion of the lateral member 313 and can operate smoothly.

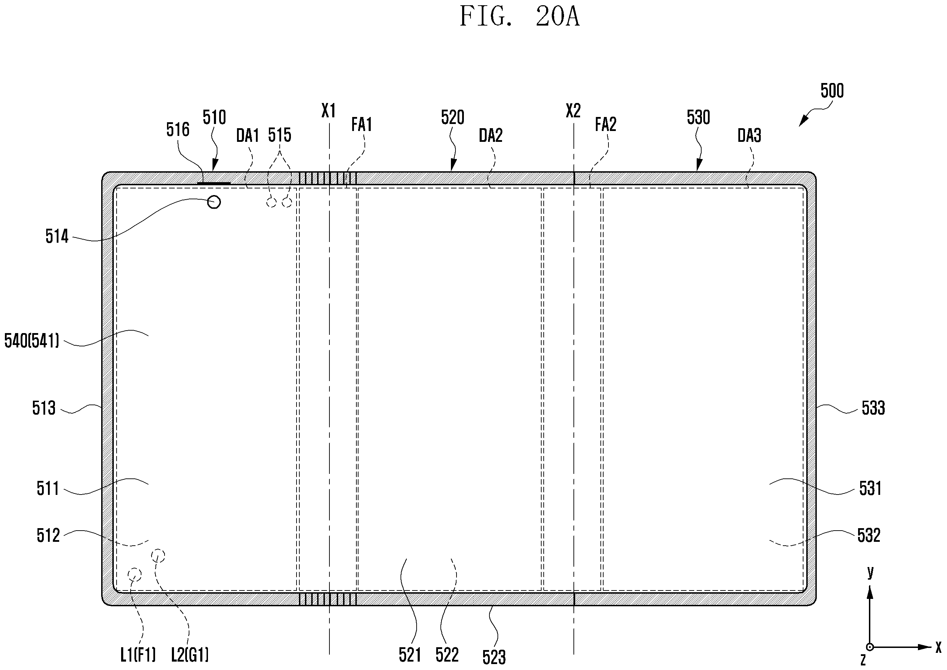

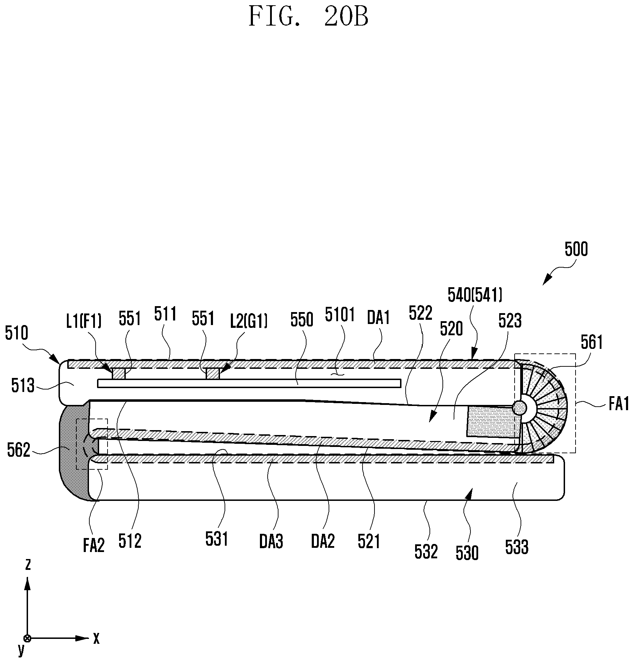

FIG. 20a is a diagram of an electronic device that schematically illustrates the unfolded state according to various embodiments of the present disclosure. FIG. 20b is a diagram of an electronic device that schematically illustrates the folded state of the electronic device of FIG. 20a according to various embodiments of the present disclosure.

With reference toFIG. 20a and 20b, the electronic device 500 (e.g., the multi-foldable electronic device) may include a first housing 510, a second housing 520, and a third housing 530 that are rotationally disposed with respect to each other. In one embodiment, the electronic device 500 may include a flexible display 540 (e.g., a first display) that is disposed to support the first housing 510, the second housing 520, and the third housing 530. In one embodiment, the first housing 510 and the second housing 520 may be rotatably connected with respect to each other relative to the first folding shaft X1 through the first hinge device 561. In one embodiment, the second housing 520 and the third housing 530 may be rotationally connected with respect to each other relative to the second folding axis X2 through the second hinge device 562. In one embodiment, the first housing 510 and the second housing 520 may be operated in a first folding mode (e.g., an out-folding method) through the first hinge device 561. For example, the first housing 510 and the second housing 520, when folded, may be positioned in opposite directions so that the display areas facing each housing 510 and 520 can be viewed externally.

According to various embodiments, the second housing 520 and the third housing 530 may be operated in a second folding method (e.g., an in-folding method) through the second hinge device 562. For example, the second housing 520 and the third housing 530 may be folded so that, in a folded state, the display areas facing each housing 520 and 530 face each other. In one embodiment, the electronic device 500 may be operated with the first housing 510, the second housing 520 and the third housing 530 fully unfolded. In one embodiment, the electronic device 500 may be operated with only the first housing 510 and the second housing 520 folded. In one embodiment, the electronic device 500 may be operated with the first housing 510, the second housing 520 and the third housing 530 all folded. In one embodiment, the display area facing the first housing 510 may, in a fully folded state, be disposed toward the outside of the electronic device 500 so that it can be seen by the user. In such cases, the camera module 514 and the sensor module 515 may be disposed to detect the external environment through the display area corresponding to the first housing 510. In some embodiments, the camera module 514 and/or the sensor module 515 may be disposed under flexible display 540 not to be seen fromthe outside.

According to various embodiments, the first housing 510 may include a first surface 511, a second surface 512 facing the opposite direction to the first surface 511, and a first lateral member 513 surrounding the space between the first surface 511 and the second surface 512. In one embodiment, the second housing 520 may include a third surface 521, a fourth surface 522 facing opposite to the third surface 521, and a second lateral member 523 surrounding the space between the third surface 521 and the fourth surface 522. In one embodiment, the third housing 530 may include a fifth surface 531, a sixth surface 532 facing opposite to the fifth surface 531, and a third lateral member 533 surrounding the space between the fifth surface 531 and the sixth surface 532. In one embodiment, the flexible display 540 may be disposed to include a first area DA1 corresponding to the first surface 511, a second area DA2 corresponding to the third side 521, and a third area DA3 corresponding to the fifth surface 531, and to be supported by the first, third, and fifth surfaces 511, 521, and 531. In some embodiments, the electronic device 500 may include a subdisplay (e.g., a second display) (e.g., a display 400 of FIG.5c) that is disposed in the first space 5101 of the first housing 510 facing the flexible display 540.

According to various embodiments, the electronic device 500 may include a conductive sheet 541 disposed in such a way that it is attached to the rear surface of the display panel of the flexible display 540. In one embodiment, the electronic device 500 may include a board 550 (e.g., a board 361 of FIG. 5c) disposed in the inner space 5101 of the first housing 510. In one embodiment, the conductive sheet 541 may be operated as an antenna by including a power feed unit F1 (e.g., a power feed unit F1 of FIG. 5c) that is electrically connected to a wireless communication circuit (e.g., a wireless communication module 192 of FIG. 1) disposed on the board 550 at the first point L1, through an electrical connection member 551 (e.g., a conductive pad 3181 and/or a conductive contact 3182 of FIG.5c). For example, the antenna using the conductive sheet 541 may operate smoothly even though the first area DA1 of the flexible display 540 is overlapped with the second area DA2 and/or the third area DA3 in the folded state. In some embodiments, the conductive sheet 541 may help to determine the radiation features of the antenna by including a ground part G1 electrically connected to the ground of the board 550 through an electrical connection member 551 (e.g., a connector 433 of FIG.5c or an electrical connection member 319 of FIG. 11) at a second point (e.g. L2) spaced from the power feed unit F 1.

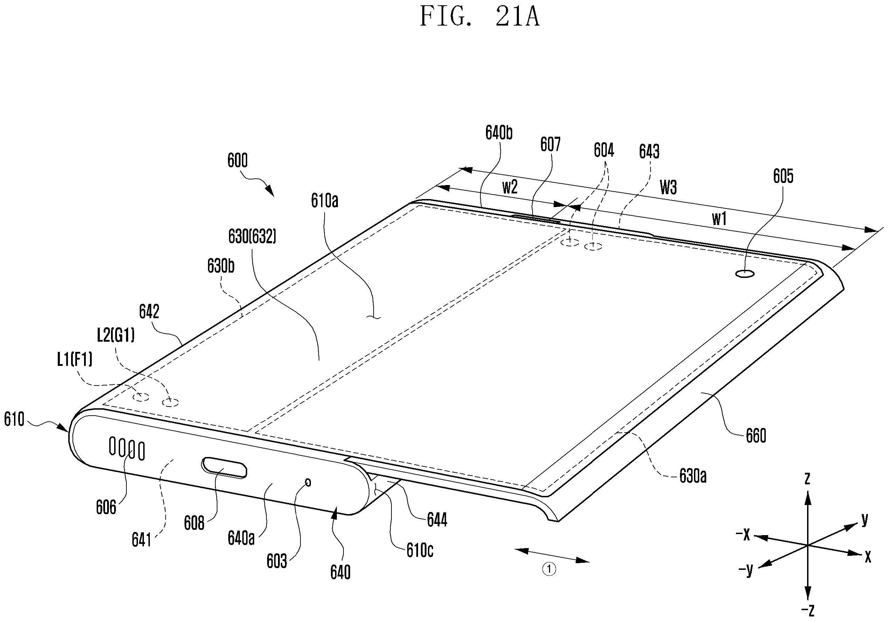

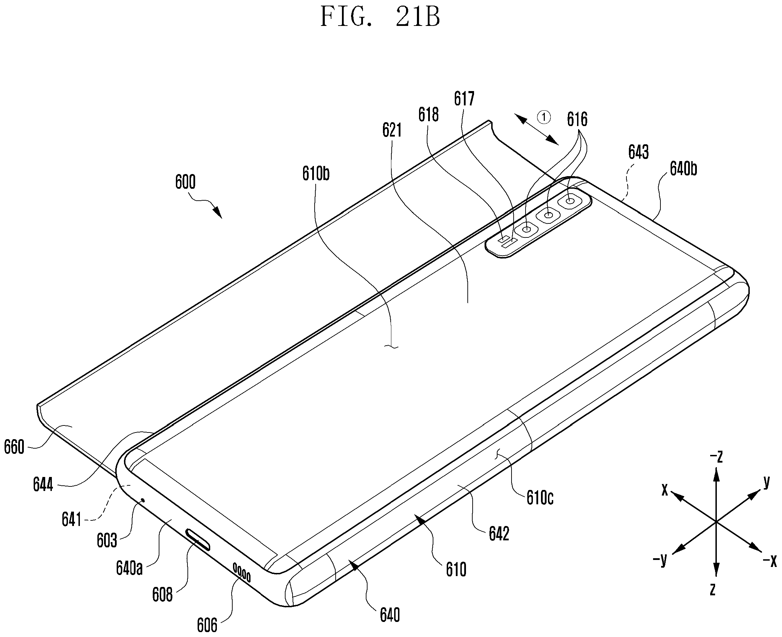

FIG. 21a is a front perspective view of the electronic device according to various embodiments of the present disclosure. FIG. 21b is a rear perspective view of the electronic device according to various embodiments of the present disclosure.

With reference to FIGS. 21a and 21b, the electronic device 600 may include a housing 610 (e.g., a first housing or base housing) and a slide structure 660 (e.g., a second housing or a slide housing) that is at least partially movably coupled from the housing 610 and supports at least a portion of the flexible display 630. In one embodiment, the slide structure 660 may be coupled to one end and include a bendable member (not shown) (e.g., an articulated hinge or a multi-bar assembly) that supports at least a portion of the flexible display 630. For example, when the slide structure 660 performs a sliding motion in the housing 610, the bendable member may be at least partially slid into the inner space of the housing 610 while supporting the flexible display 630. In one embodiment, the electronic device 600 may include a housing 610 (e.g., a housing structure) that surrounds the space between the front surface 610a facing the first direction (e.g., Z-axis direction), the rear surface 610b facing the second direction (e.g., -Z-axis direction) opposite the first direction, and the lateral member 640 including the side surface 610c that is at least partially exposed to the outside. In one embodiment, the rear surface 610b may be formed through the rear cover 621 coupled to the housing 610. In one embodiment, the rear cover 621 may be formed by a polymer, a coated or colored glass, a ceramic, a metal (e.g., analuminum, a stainless steel (STS), or a magnesium), or a combination of at least two of the materials. In some embodiments, the rear cover 621 may be integrated with the housing 610. In one embodiment, at least a portion of the side surface 610c may be disposed to be exposed to the outside through the housing 610.

According to various embodiments, the lateral member 640 may include a first side surface 641 having a first length, a second side surface 642 extending from the first side surface 641 in a perpendicular direction and having a second length longer than the first length, a third side surface 643 extending parallel to the first side surface 641 from the second side surface 642 and having a first length, and a fourth side surface 644 extending parallel to the second side surface 642 from the thirdside surface 643 and having a second length. In one embodiment, the slide structure 660 may support the flexible display 630 and may expand the display area of flexible display 630 by being slid out from the second side surface 642 to the fourth side surface 644 direction (e.g., X-axis direction), or shrink the display area of flexible display 630 by being slidin from the fourth side surface 644 to the second side surface 642 direction (e.g.,-X-axis direction). In one embodiment, the electronic device 600 may include a first side cover 640a and a second side cover 640b to cover the first side surface 641 and the third side surface 643. In one embodiment, the first side surface 641 and the third side surface 643 may be disposed not to be exposed to the outside through the first side cover 640a and the second side cover 640b.

According to various embodiments, the electronic device 600 may include a flexible display 630 that is disposed to be supported by the slide structure 660. In one embodiment, the flexible display 630 may include a first portion 630a (e.g., a flat portion) supported by the slide structure 660 and a second portion 630b (e.g., a bending part or a bendable part) that extends from the first portion 630a and at least partially supported through a bendable member. In one embodiment, at least a portion of the second portion 630b may be slid into the inner space of the housing 610 and be disposed not to be exposed to the outside in the slide-in state (e.g., the state of at least a portion of the slide structure 660 slid into the housing 610) of the electronic device 600, and may be exposed to the outside at least partially with the support of at least a portion of the bendable member, extending from the first portion 630a in the slide-out state (e.g., the state of at least a portion of the slide structure 660 slid out from the housing 610) of the electronic device. Therefore, the electronic device 600 may include a rollable type or a slidable type of electronic device in which the display area of the flexible display 630 changes as the slide structure 660 moves from the housing 610.

According to various embodiments, the slide structure 660 may be movably coupled to at least partially slide in or slide out of the housing 610. For example, the flexible display 630 may be constituted to have a display area corresponding to the first width W1 from the second side surface 642 to the fourth side surface 644 in the slide-in state. In one embodiment, the flexible display 630may be modified to have a display area corresponding to the third width W3 larger than the first width W1,in the slide-out state of the slide structure 660, by moving at least a portion of the bendable member slid into the inside the housing 610 to the outside of the electronic device to have an additional second width W2. Therefore, the flexible display 630 may vary in display area in response to the width of the electronic device being varied according to the sliding motion of the slide structure 660.

According to various embodiments, the electronic device 600 may include at least one of an input device 603, sound output devices 606 and 607, sensor modules 604 and 617, camera modules 605 and 616, a connector port 608, a keystroke device (not shown) or an indicator (not shown). In another embodiments, the electronic device 600 may omit at least one of the above-described components or include other components additionally.

In various embodiments, the input device 603 may include a microphone. In some embodiments, the input device 603 may include a plurality of microphones disposed to detect the direction of sound. The sound output devices 606 and 607 may include speakers. The sound output devices 606 and 607 may include an external speaker 606 and a call receiver 607. In other embodiments, the sound output devices 606 and 607 may include a speaker (e.g., a piezo speaker) that operates without a separate speaker hole.

According to various embodiments, the sensor modules 604 and 617 may generate electrical signals or data values corresponding to the internal operating state of electronic device 600 or external environmental conditions. The sensor modules 604 and 617 may, for example, include a first sensor module 604 (e.g., a proximity sensor or an illuminance sensor) disposed in the front surface of the electronic device and/or a second sensor module 617 (e.g., an HRM sensor) disposed in the rear surface. In one embodiment, the first sensor module 604 may be disposed on the front surface 610a of the electronic device 600, under the flexible display 630. In one embodiment, the first sensor module 604 may include at least one of a proximity sensor, an illuminance sensor, a time of flight (TOF) sensor, an ultrasonic sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera devices 605 and 616 may include a first camera device 605 disposed in the front surface 610a of the electronic device 600, and a second camera device 616 disposed in the rear surface 610b. In one embodiment, the electronic device 600 may include a flash 618 disposed near the second camera device 616. In one embodiment, the camera devices 605 and 616 may include one or more lenses, an image sensor, and/or an image signal processor. In one embodiment, the first camera device 605 may be disposed under the flexible display 630 and may be constituted to photograph the subject through some of the active areas of the flexible display 630. In one embodiment, the flash 618 may, for example, include a light-emitting diode or xenon lamp. In some embodiments, two or more lenses (a wide-angle and a telephoto) and image sensors may be disposed on one side of the electronic device 600.

According to various embodiments, the electronic device 600 may include at least one antenna (not shown). In one embodiment, at least one antenna may, for example, communicate wirelessly with an external electronic device or wirelessly transmit and receive the power required for charging. In one embodiment, the antenna may include a legacy antenna, a mmWave antenna, a near field communication (NFC) antenna, a wireless charging antenna, and/or a magnetic secure transmission (MST) antenna.

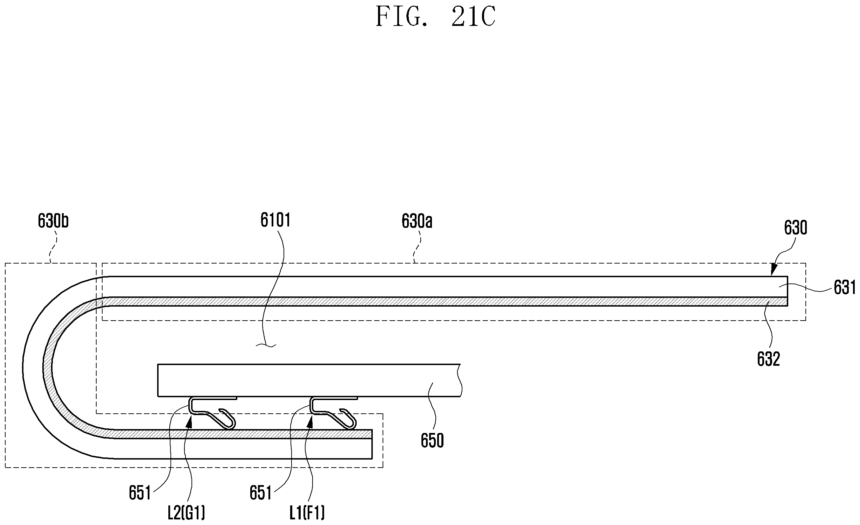

FIG. 21c is a configuration diagram of the electrical connection relationship between a flexible display and a board in the bendable area according to various embodiments of the present disclosure.

With reference to FIG. 21c, the electronic device 600 may include a conductive sheet 632 disposed in such a way that it is attached to the rear surface of the display panel 631 of the flexible display 630. In one embodiment, the electronic device 600 may include a board 650 (e.g., the board 361 of FIG. 5c) disposed in the inner space 6101 of housing 610. In one embodiment, the conductive sheet 632 may be operated as an antenna by including the power feed unit F1 (e.g., the power feed unit F1 of FIG. 5c) electrically connected to the wireless communication circuit (e.g., the wireless communication module 192 of FIG. 1) disposed on the board 650 at the first point L1 through the electrical connection member 651 (e.g., the conductive pad 3181 and/or the conductive contact 3182 of FIG. 5c) when the second portion 630b of the flexible display 630 is accommodated into the inner space 6101 of the housing 610in a slide-in state. For example, even though the second portion 630b of the flexible display 630 is overlapped with the first portion 630a in a slide-in state, the antenna using the conductive sheet 632 may operate smoothly. In some embodiments, the conductive sheet 632 may help to determine the radiation features of the antenna by including a ground part G1 electrically connected to the ground of the board 650 at the second point L2 spaced apart from the power feed unit F1 through an electrical connection member 651 (e.g., a connector 433 of FIG. 5c or an electrical connection member 319 of FIG. 11).

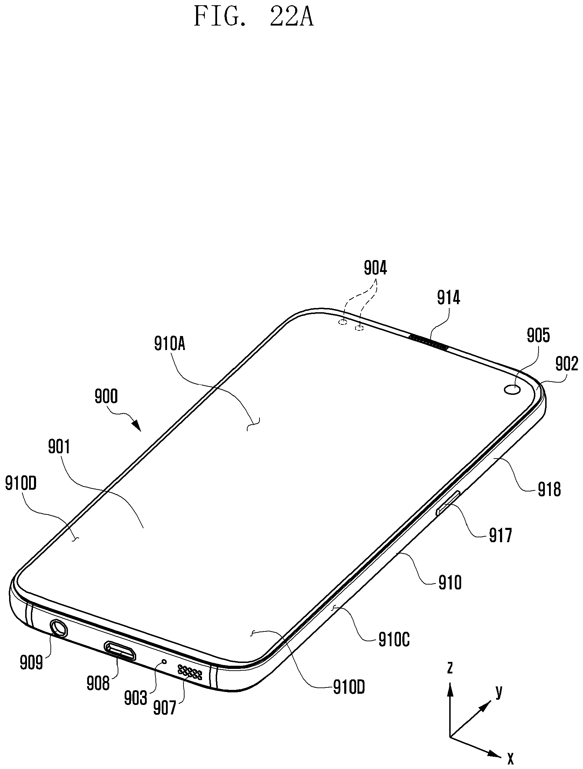

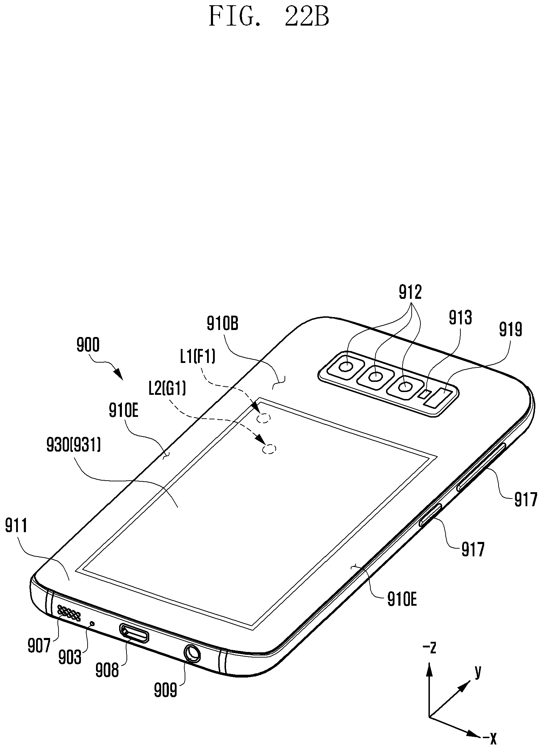

FIG. 22a is a front perspective view of the electronic deviceaccording to various embodiments of the present disclosure.FIG. 22b is a rear perspective view of the electronic device according to various embodiments of the present disclosure.

With reference to FIGS. 22a and 22b, the electronic device 900 may include a housing 910 comprising a first surface (or a front surface) 910a, a second surface (or a rear surface) 910b, and a side surface 910c surrounding the space between the first surface 910a and the second surface 910b. In another embodiment (not shown), the housing 910 may refer to a structure forming some of the first surface 910a, the second surface 910b, and the side surface 910c of FIG. 22a. In one embodiment, the first surface 910a may be formed by a front plate 902 (e.g., a glass plate including various coating layers, or a polymer plate) that is at least partially transparent. The second surface 910b may be formed by a substantially opaque rear plate 911. The rear plate 911 may, for example, be formed by a coated or colored glass, a ceramic, a polymer, a metal (e.g., an aluminum, a stainless steel (STS), or a magnesium), or a combination of at least two of the materials. The side surface 910c, in conjunction with the front plate 902 and the rear plate 911, may be formed by a side bezel structure 918 (or "lateral member") including a metal and/or a polymer. In some embodiments, the rear plate 911 and the side bezel structure 918 may be formed integrally and contain the same material (e.g., a metal material such as an aluminum).

In the embodiment shown, the front plate 902 may include a first area 910d that curves from the first surface 910a toward the rear plate and extends seamlessly, at both ends of the long edge of the front plate 902. In the embodiment shown (see FIG. 16b), the rear plate 911 may include a second area 910e that curves from the second surface 910b toward the front plate 902 and extends seamlessly, at both ends of the long edge. In some embodiments, the front plate 902 or the rear plate 911 may include only one of the first area 910d or the second area 910e. In some embodiments, the front plate 902 may not include the first and second areas, but only a flat plane disposed parallel to the second plane 910b. In the embodiments, when viewed from the side surface of the electronic device 900, the side bezel structure 918 may have a first thickness (or width) on the side surface that does not include the first area 910d or the second area 910e as described above, and may have a second thickness thinner than the first thickness on the side surface that includes the first area 910d or the second area 910e.

According to one embodiment, the electronic device 900 may include at least one or more of a display 901 (e.g., a first display), an input device 903, sound output devices 907 and 914, sensor modules 904 and 919, camera module 905, 912, and 913, a keystroke device 917, an indicator (not shown), and connectors 908 and 909. In some embodiments, the electronic device 900 may omit at least one of the components (e.g., a keystroke device 917, or an indicator) or include another component additionally.

The display 901, for example, may be exposed through a significant portion of the front plate 902. In some embodiments, at least a portion of the display 901 may be exposed through the front plate 902 forming the first surface 910a, and the first area 910d of the side surface 910c. For example, the display 901 may be coupled to or disposed adjacent to a touch-sensitive circuitry, a pressure sensor capable of measuring the strength (pressure) of a touch, and/or a digitizer detecting a magnetic field-type stylus pen. In some embodiments, at least a portion of the sensor modules 904 and 919, and/or at least a portion of the keystroke device 917 may be disposed in the first area 910d, and/or the second area 910e.

According to one embodiment, the input device 903 may include a microphone. In some embodiments, the input device 903 may include a plurality of microphones disposed to detect the direction of sound. The sound output devices 907 and 914 may include speakers. The sound output devices 907 and 914 may include an external speaker 907 and a call receiver 914. In some embodiments, the input device 903, the sound output devices 907 and 914 and the connectors 908 and 909 are disposed in the space of the electronic device 900 and may be exposed to the external environment through at least one hole formed in housing 910. In some embodiments, the hole formed in housing 910 may be used for the input device 903 and the sound output devices 907 and 914. In some embodiments, the sound output devices 907 and 914 may include a speaker (e.g., piezo speaker) that is operated without the holes formed in the housing 910.

According to one embodiment, the sensor modules 904 and 919 may generate electrical signals or data values corresponding to the internal operating state of electronic device 900 or external environmental conditions. The sensor modules 904 and 919 may, for example, include a first sensor module 904 (e.g., a proximity sensor) and/or a second sensor module (not shown) (e.g., a fingerprint sensor) disposed on the first surface 910a of the housing 910 and/or a third sensor module 919 (e.g., an HRM sensor) disposed on the second surface 910b of the housing 910. The fingerprint sensor may be disposed on the first surface 910a of the housing 910. A fingerprint sensor (e.g., an ultrasonic or an optical fingerprint sensor) may be disposed under the display 901 on the first surface 910a. The electronic device 900 may further include at least one of the sensor modules not shown such as a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 904.

According to one embodiment, the camera modules 905, 912, and 913 may include a first camera module 905 disposed on the first surface 910a of the electronic device 900, and/or a second camera module 912 disposed on the second surface 910b, and/or a flash 913. The camera modules 905 and 912 may include one or more lenses, an image sensor, and/or an image signal processor. The flash 913 may, for example, include a light-emitting diode or a xenon lamp. In some embodiments, two or more lenses (wide-angle and telephoto) and image sensors may be disposed on one surface of the electronic device 900.

According to one embodiment, the keystroke device 917 may be disposed on the side surface 910c of housing 910. In another embodiment, the electronic device 900 may not include some or all of the keystroke devices 917 and the keystroke device 917 that is not included may be implemented in another form, such as a soft key, on the display 901. In another embodiment, the keystroke device 917 may be implemented using a pressure sensor included in display 901.

The indicator may, for example, be disposed on the first surface 910a of the housing 910. The indicator may, for example, provide status information of the electronic device 900 in light form. In another embodiment, the light-emitting element may, for example, provide a light source that is interworked with the operation of the camera module 905. Indicators may, for example, include LED, IR LED, and/or xenon lamps.

According to one embodiment, the connector holes 908 and 909 may include a connector hole 908 that may accommodate a connector (e.g., a USB connector or an IF module (interface connector port module)) for transmitting and receiving power and/or data with an external electronic device, and/or a second connector hole 909 (or earphone jack)that may accommodate a connector for transmitting and receiving audio signals with an external electronic device.

According to one embodiment, some camera module 905 of the camera modules 905 and 912, some sensor module 904 of the sensor modules 904 and 919, or the indicator may be disposed to be exposed through the display 901. For example, the camera module 905, the sensor module 904 or the indicator may be disposed in the inner space of the electronic device 900 to contact the external environment through a perforated opening of the display 901 to the front plate 902. In another embodiment, some sensor module 904 may be disposed in the inner space of the electronic device to perform its functions without being visually exposed through the front plate 902. For example, in this case, the area facing the sensor module of display 901 may not require a perforated opening.

According to various embodiments, the electronic device 900 may include a subdisplay 930 (e.g., a second display) disposed to be viewed from the outside through at least a portion of the rear plate 911 and disposed to be overlapped with the display 901. In one embodiment, the subdisplay 930 may be activated to minimize power consumption and perform relatively simple functions of electronic device 900 while display 901 of electronic device 900 is disabled.

According to various embodiments, the electronic device 900 may include a conductive sheet 931 disposed in such a way that it is attached to the rear surface of the display panel of the subdisplay 930. In one embodiment, the electronic device 900 may include a board (e.g., the board 361 of FIG. 5c) disposed in the inner space of the housing 910. In one embodiment, the conductive sheet 931 may include a feeding point located at the first point L1 corresponding to some area of subdisplay 930 and a grounding point located at the second point L2 spaced apart at predetermined intervals from the first point L1. In one embodiment, the feeding point may be electrically connected to a wireless communication circuit (e.g., a wireless communication module 192 of FIG. 1) disposed on the board at the first point L1 through a first power feed unit F1 (e.g., a power feed unit F1 of FIG. 5c) including the electrical connection member (e.g., a conductive pad 3181 and/or a conductive contact 3182 of FIG.5c). Therefore, at least a portion of the conductive sheet 931 may be operated as an antenna. For example, even though the subdisplay 930 is overlapped with the display 901, the antenna using the conductive sheet 931 may operate smoothly. In one embodiment, the grounding point of the conductive sheet 931 may be electrically connected to the ground of the board at the second point L2 through the ground part G1 including an electrical connection member (e.g., a connector 433 of FIG. 5c or an electrical connection member 319 of FIG. 11), which may help to determine the radiation features of the antenna.

The antenna using a conductive sheet (e.g., a conductive sheet 450 of FIG.5c) according to the exemplary embodiments of the present disclosure has been described as applying the power feed unit F1 and the ground part G1 in the overlapping area between the two displays, but is not limited to this. For example, an antenna according to the exemplary embodiment of the present disclosure may be applied to an electronic device (e.g., a tablet PC, a notebook PC, or a general bar-type electronic device) containing any number of one or more displays where a conductive sheet is disposed below a display. For example, the provision of an antenna using a conductive sheet as described above may be introduced into any of the display/electronic devices described in this disclosure.

According to various embodiments, the electronic device (e.g., the electronic device 300 in FIG.5c) may include at least one housing (e.g., the first housing 310 in FIG.5c); a first display (e.g., the first display 330 of FIG. 4) disposed in the inner space of at least one housing (e.g., the first housing 310 of FIG. 5c); a second display (e.g., the second display 400 of FIG. 5c) disposed in the inner space to be facing the opposite direction of the first display and including a display panel (e.g., the display panel 430 in FIG.5c) and a conductive sheet (e.g., the conductive sheet 450 in FIG.5c) disposed on the rear surface of the display panel; a board(e.g., the board 361 in FIG. 5c) disposed in the inner space; a wireless communication circuit (e.g., the wireless communication circuit 192) disposed on the board and electrically connected through the first point (e.g., the first point L1 of FIG. 5c) of the conductive sheet; and a grounding structure (e.g., the ground G of FIG. 5c) electrically connected to the conductive sheet in the second point L2 (e.g., the second point L2 of FIG. 5c) spaced at a distance from the first point, wherein the wireless communication circuit isconfigured to transmit or receive wireless signals in the specified frequency band through at least a portion of the conductive sheet.

According to various embodiments, the first point may be disposed in the area near one corner of the conductive sheet (e.g., the corner C of FIG.7a).

According to various embodiments, the first point may include a square shaped area having a horizontal length of X/8 in the direction (e.g., -x-axis direction of FIG. 7a) of one corner and having a vertical length of λ/8 in the direction (e.g., -y-axis direction of FIG. 7a) of the other corner with respect to the corner of the one side of the conductive sheet.

According to various embodiments, the frequency band specified above may be determined according to the location of the second point.

According to various embodiments, the second display may be at least partially overlapped with the first display.

According to various embodiments, the grounding structure may be disposed between the first display and the second display in the inner space.

According to various embodiments, the grounding structure may be the ground of the board disposed in the inner space.

According to various embodiments, the second display may include a bending part (e.g., a bending part 432 of FIG. 5c) that extends from the display panel and is attached to the conductive sheet in a bending manner.

According to various embodiments, the bending unit may include an extension part (e.g., an extension part 4321of FIG. 5c)extending from the display panel, a flexible board (e.g., a flexible board 4322 of FIG. 5c) electrically connected to the extension part, and a connector (e.g., a connector 433 of FIG. 5c) connected to the flexible board and connected to the board.

According to various embodiments, the conductive sheet may, at the second point, be electrically connected to the ground of the board through the connector.

According to various embodiments, the connector may be connected to the flexible board, the connector cable (e.g., the connector cable 435 of FIG. 14a) overlapping with the conductive sheet may be further included, and at least a portion of the connector cable may, in the overlapping area with the conductive sheet, be electrically connected to the ground of the board, by being electrically connected to the conductive sheet, through the grounding pad (e.g., the grounding pad 4351 of FIG. 14a).

According to various embodiments, the conductive sheet may, at the second point, be electrically connected to the ground of the board, through an electrical connection member.

According to various embodiments, the electrical connection member may include at least one of a metal material, a conductive tape, a conductive foam, or a conductive contact.

According to various embodiments, the conductive sheet may include an adherent metal sheet attached to the rear surface of the display panel.

According to various embodiments, the specified frequency band may include a band in the range of 400 MHz ~ 6000 MHz.

According to various embodiments, at least one of the housings may include a first housing (e.g., the first housing 310 of FIG. 2b) and a second housing (e.g., the second housing 320 of FIG. 2b) foldably coupled to the first housing through a hinge device (e.g., the hinge device 340 of FIG. 2b), wherein the first display is disposed to be supported by the first housing and the second housing, in the unfolded state, and the second display is disposed in the first housing or the second housing so that it faces the opposition direction to the first display, in the unfolded state.

According to various embodiments, at least one of the housings may include a first housing (e.g., the first housing 510 of FIG. 20b); a second housing (e.g., the second housing 520 of FIG. 20b) that is foldably coupled to the first housing through a first hinge device (e.g., the first hinge device 561 of FIG. 20b); and a third housing (e.g., the third housing 530 of FIG. 20b) that is foldably coupled to the second housing through a second hinge device (e.g., the second hinge device of FIG. 20b), wherein the first display, in the unfolded state, is disposed to be supported by the first housing, the second housing and the third housing, and the second display, in the unfolded state, is disposed on the first housing, the second housing and the third housing to be facing the opposite direction to the first housing

According to various embodiments, an electronic device (e.g., the electronic device 300 in FIG.5c) may include a first housing(e.g., the first housing 310 in FIG.2b); a second housing (e.g., the second housing 320 in FIG.2b) foldably coupled to the first housing through a hinge device(e.g., the hinge device 340 in FIG.2b);a first display (e.g., the first display 330 of FIG.2b) that, in an unfolded state, is disposed to be supported by the first housing and the second housing and disposed in the inner space of the first housing; a second display (e.g., the display 400 of FIG.5c) disposed in the inner space to be facing the opposite direction of the first display and including a display panel (e.g., the display panel 430 of FIG. 5c) and a conductive sheet (e.g., the conductive sheet of FIG. 5c) disposed on the rear surface of the display panel;a board(e.g., the board 361 of FIG. 5) disposed between the first display and the second display in the inner space; a wireless communication circuit (e.g., the wireless communication circuit 192 of FIG. 6a) disposed on the board and electrically connected through the first point (e.g., the first point L1 of FIG. 5c) of the conductive sheet; and a grounding structure (e.g., the ground G of FIG. 5c) electrically connected to the conductive sheet in the second point (e.g., the second point L2 of FIG. 5c) spaced at a distance from the first point, wherein the wireless communication circuit is configured to transmit or receive a wireless signal in a specified frequency band through at least a portion of the conductive sheet.

According to various embodiments, the first point may include a square shaped area having a horizontal length of X/8 in the direction (e.g., -x-axis direction of FIG. 7a) of one corner and having a vertical length of λ/8 in the direction (e.g., -y-axis direction of FIG. 7a) of the other corner with respect to the corner (e.g., the center C of FIG. 7a) of the one side of the conductive sheet.

According to various embodiments, the second display may include an extension part (e.g., an extension part 4321 of FIG. 5c) extending from the display panel, as a bending part (e.g., a bending part 432 of FIG. 5c) that extends from the display panel and is attached to the conductive sheet in a bending manner; a flexible board (e.g., a flexible board 4322 of FIG. 5c) that is electrically connected to the extension part; and a connector (e.g., a connector 433 of FIG. 5c) that is connected to a flexible board and connected to a board, wherein the conductive sheet is electrically connected to the ground of the board through the connector at the second point.

In addition, the embodiments of the present document disclosed in the present specification and drawings are merely presented as specific examples to easily explain the technical contents according to the embodiments disclosed in the present disclosure and to facilitate the understanding of the embodiments disclosed in the present disclosure, but are not intended to limit the scope of the embodiments disclosed in the present disclosure. Therefore, the scope of the various embodiments disclosed in the present disclosure should be interpreted to include all changes or modifications derived based on the technical ideas of the various embodiments disclosed in the present disclosure, in addition to the embodiments disclosed in the present disclosure.

It will be appreciated that, in addition to the embodiments disclosed above, the present disclosure also considers, and includes, embodiments based on a combination of any two or more of the embodiments disclosed above, and embodiments comprising any combination of the features disclosed herein. That is, the lack of an explicit indication that two features may be combined or two embodiments may be combined does not mean such a combination is not envisaged, but instead such a combination should be seen to be included herein.

## Claims

1. An electronic device comprising:
at least one housing (310);
a first display (400) disposed in the at least one housing and comprising a display panel (430) and a conductive sheet (450);
a circuit board (361) disposed in the inner space;
a wireless communication circuit (192) disposed on the circuit board (361) and electrically connected to the conductive sheet (450) at a first point (L1) on the conductive sheet (450); and
a grounding structure (G) electrically connected to the conductive sheet at a second point (L2) on the conductive sheet (450) and spaced from the first point (L1),
wherein the wireless communication circuit (192) is configured to transmit or receive wireless signals in a specified frequency band through at least a portion of the conductive sheet (450).

2. The electronic device of claim 1, wherein the first point is disposed in an area extending from one corner (C) of the conductive sheet.

3. The electronic device of claim 2, wherein the area comprises a square-shaped area having a horizontal length of λ/8 in a direction along a first edge of the conductive sheet (-x-axis direction) that adjoins the one corner and having a vertical length of λ/8 in a direction along a second edge of the conductive sheet (-y-axis direction) that adjoins the one corner.

4. The electronic device of any of claims 1 to 3, wherein the specified frequency band is determined by the location of the second point on the conductive sheet.

5. The electronic device of any of claims 1 to 4, further comprising a second display (330) disposed in the at least one housing and facing in an opposite direction to the first display (440), wherein the second display is disposed to be at least partially overlapped with the first display.

6. The electronic device of claim 5, wherein the grounding structure is disposed between the first display and the second display in the inner space.

7. The electronic device of any of claims 1 to 4, wherein the grounding structure is the ground of the circuit board disposed in the inner space.

8. The electronic device of claim 7, wherein the first display comprises a bending part (432) that extends from the display panel and is attached to the conductive sheet in a bending manner.

9. The electronic device of claim 8, wherein the bending part comprises:
an extension part (4321) extending from the display panel;
a flexible circuit board (4322) electrically connected to the extension part; and
a connector (433) electrically connected to the flexible circuit board and electrically connected to the circuit board.

10. The electronic device of claim 9, wherein the conductive sheet, at the second point, is electrically connected to the ground of the circuit board through the connector.

11. The electronic device of claims 9 or 10, further comprising a connector cable (435) disposed to be overlapped with the conductive sheet, the connector cable electrically connecting the flexible circuit board and the connector,
wherein at least a portion of the connector cable is electrically connected to the ground of the circuit board by being electrically connected to the conductive sheet in the overlapping area with the conductive sheet through a ground pad (4351).

12. The electronic device of claim 7, wherein the conductive sheet, at the second point, is electrically connected to the ground of the circuit board through an electrical connection member.

13. The electronic device of claim 12, wherein the electrical connection member comprises at least one of a metal material, a conductive tape, a conductive foam, or a conductive contact.

14. The electronic device of any of claims 1 to 13, wherein the conductive sheet comprises an adhesive metal sheet that is attached to a rear surface of the display panel.

15. The electronic device of any of claims 1 to 14, wherein the specified frequency band comprises a band in the range of 400 MHz ~ 6000 MHz.
